# EUROPEAN PATENT SPECIFICATION

(11) **EP 3 682 840 B1**
(45) Date of publication and mention of the grant of the patent: **24.02.2021**
(21) Application number: 19152825.6
(22) Date of filing: 21.01.2019
(51) Int. Cl.: A61C 5/40, A61C 5/44, A61C 9/00, A61C 1/00

(54) **ROOT CANAL TREATMENT SUPPORT APPARATUS, PROGRAM, ROOT CANAL TREATMENT APPARATUS, AND ROOT CANAL TREATMENT SUPPORT SYSTEM**
WURZELKANALBEHANDLUNGUNTERSTÜTZUNGSVORRICHTUNG, PROGRAMM, WURZELKANALBEHANDLUNGSVORRICHTUNG UND WURZELKANALBEHANDLUNGUNTERSTÜTZUNGSSYSTEM
APPAREIL DE SUPPORT DE TRAITEMENT DE CANAL DE RACINE, PROGRAMME, APPAREIL DE TRAITEMENT DE CANAL RADICULAIRE ET SYSTÈME DE SUPPORT DE TRAITEMENT DE CANAL RADICULAIRE

(43) Date of publication of application: 22.07.2020
(73) Proprietor: J. MORITA MANUFACTURING CORPORATION, Fushimi-ku, Kyoto-shi, Kyoto 6128533 (JP)
(72) Inventor: NAKAI, Teruji, Kyoto, 612-8533 (JP)
(74) Representative: Müller Hoffmann & Partner

(56) References cited:
- US-A1- 2017 065 370
- US-A1- 2017 071 713
- US-A1- 2018 075 210

## Description

### BACKGROUND OF THE INVENTION

### Field of the Invention

The present invention relates to a root canal treatment apparatus for cutting a root canal of a tooth and enlarging the root canal, a root canal treatment support apparatus for supporting the root canal treatment apparatus, a medium having a program recorded thereon, and a root canal treatment support system including the root canal treatment apparatus, the root canal treatment support apparatus and the medium.

### Description of the Background Art

In dental treatment, root canal treatment for cutting and enlarging a root canal of a tooth is performed. In this root canal treatment, a root canal treatment apparatus is used, which includes a handpiece having a head equipped with a cutting tool that is called a file or a reamer. The cutting tool is driven to cut and enlarge a root canal of a tooth. There have been proposals of an apparatus and a system for providing various types of support when root canal treatment is performed by a root canal treatment apparatus. For example, there are an apparatus and a system that are disclosed in Japanese Patent No. 5483518, Japanese Patent No. 5993446, and the like.

In the medical care display apparatus disclosed in Japanese Patent No. 5483518, an X-ray image data is stored in advance in a memory (for example, a hard disk drive, a random access memory (RAM) and the like in a computer) of an image processing unit, so as to allow display of an image obtained by superimposing a real time image of an affected part, data of the position inside a root canal and X-ray image data.

In the system disclosed in Japanese Patent No. 5993446, the position of the inlet into a root canal relative to the occlusal surface of a tooth can be visualized, so that the shape of the access cavity to a pulp chamber can be determined at least based on the position of the inlet into the root canal.

US2017/0071713 discloses a root canal treatment apparatus which includes a root canal treatment hand piece having a visible light camera which captures a visible light image of a tooth as a target of interest, and circuitry which detects a position of the root canal treating hand piece, and instructs display of three images corresponding to at least a tip position of a cutting tool attached to the root canal treating hand piece, an X-ray cross-sectional image of the tooth captured by X-ray CT image beforehand, and the visible light image captured by the visible light camera such that the three images are displayed on a display in an overlapping manner in positional correspondence with one another, based on information on the position of the root canal treating hand piece detected by the circuitry.

### SUMMARY OF THE INVENTION

The invention is as defined in the appended set of claims.

In the conventional apparatus and system for providing support for root canal treatment, only the information for visualizing the shape of a root canal is provided by X-ray computed tomography (CT) and the like, but comprehensive root canal treatment support information such as information about a cutting tool suitable to the shape of a root canal and information about drive control of a cutting tool cannot be provided. Furthermore, the root canal to be treated often has a curved shape. Thus, when the curved root canal is enlarged by a cutting tool, excessive torque may be applied onto the cutting tool, which may break the cutting tool located inside the root canal. When the cutting tool is broken inside the root canal, the tooth itself may have to be pulled in order to remove the broken cutting tool. Accordingly, operators require information not only used for visualizing the shape of a root canal by X-ray CT and the like but also related to comprehensive root canal treatment.

The present disclosure has been made to solve the above-described problems. An object of the present disclosure is to provide: a root canal treatment support apparatus capable of outputting information related to root canal treatment; a medium having a program recorded thereon; a root canal treatment apparatus; and a root canal treatment support system.

A root canal treatment support apparatus for providing information that can be used for root canal treatment, the root canal treatment support apparatus comprising:an accepting unit configured to accept image information obtained by imaging a root canal of a tooth;an information generation unit configured to generate information related to root canal treatment suitable to a root canal shape based on the image information accepted by the accepting unit; and an output unit configured to output the information generated by the information generation unit, wherein the information generation unit includes a classification specification unit configured to specify a classification of the root canal shape based on the image information accepted by the accepting unit, a memory in which the information related to root canal treatment is stored for each classification of the root canal shape, and a selection unit configured to select the information related to root canal treatment from the memory based on the classification specified by the classification specification unit.

A medium having a program recorded thereon for controlling a root canal treatment support apparatus for providing information that can be used for root canal treatment according to an aspect of the present embodiment is provided. The program includes: accepting image information obtained by imaging a root canal of a tooth;generating information related to root canal treatment suitable to a root canal shape based on the image information accepted;outputting the information generated;specifying a classification of the root canal shape based on the image information accepted; and selecting information related to root canal treatment stored for each classification of the root canal shape from a memory based on the classification specified.

A root canal treatment apparatus used for root canal treatment according to an aspect of the present embodiment includes: a handpiece having a head at which a cutting tool is held in a drivable manner; a drive unit configured to drive the cutting tool held at the head; a controller configured to control the drive unit; and the root canal treatment support apparatus described in the above.

A root canal treatment support system comprising: a root canal treatment apparatus according to the root canal treatment apparatus above, wherein the controller is configured to control the drive unit to drive the cutting tool based on the information output from the output unit.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram showing the configuration of a root canal treatment support system according to the present first embodiment.
Fig. 2 is a block diagram showing the configuration of a root canal treatment apparatus according to the present first embodiment.
Fig. 3 is a block diagram showing the hardware configuration of a root canal treatment support apparatus according to the present first embodiment.
Fig. 4 is a block diagram for illustrating the configuration of the root canal treatment support apparatus according to the present first embodiment.
Fig. 5A is a diagram for illustrating an example of information related to the type of a root canal shape.
Fig. 5B is a diagram for illustrating an example of the information related to the type of the root canal shape.
Fig. 6A is a diagram for illustrating an example of information related to root canal treatment.
Fig. 6B is a diagram for illustrating an example of the information related to the root canal treatment.
Fig. 7 is a diagram showing an example of a drive sequence controlled by the root canal treatment apparatus.
Fig. 8 is a flowchart for illustrating a process in the root canal treatment support apparatus according to the present first embodiment.
Fig. 9 is a diagram for illustrating another example of the information related to the type of the root canal shape.
Fig. 10 is a diagram showing an example of a drive sequence that is output in accordance with a region of a root canal in a root canal treatment support apparatus according to the present second embodiment.
Fig. 11 is a schematic diagram showing the configuration of a root canal treatment apparatus according to the present third embodiment.
Fig. 12 is a block diagram showing the configuration of the root canal treatment apparatus according to the present third embodiment.
Fig. 13 is a flowchart for illustrating a process in the root canal treatment apparatus according to the present third embodiment.
Fig. 14 is a block diagram for illustrating the configuration of a root canal treatment support apparatus according to the present fourth embodiment.
Fig. 15A is a diagram for illustrating an example of setting information for each analysis information about a root canal shape.
Fig. 15B is a diagram for illustrating an example of the setting information for each analysis information about the root canal shape.
Fig. 16 is a flowchart for illustrating a process in the root canal treatment support apparatus according to the present fourth embodiment.
Fig. 17 is a flowchart for illustrating a process in another root canal treatment apparatus according to the present fourth embodiment.

### DESCRIPTION OF THE PREFERRED EMBODIMENTS

### (Summary of Present Disclosure)

The root canal shape of a tooth greatly varies depending on the person and the position of his/her tooth. Thus, there are root canals congenitally formed in various shapes such as a largely curved root canal, a branched root canal, a plurality of root canals merging with each other. Furthermore, the shape of the root canal of a tooth may be changed in a posteriori manner such that the root canal becomes clogged due to calcification, the root canal is fractured, pus accumulating in a root apex causes a radicular cyst, and the like.

In this way, the treatment by cutting and enlarging root canals having various shapes is extremely difficult to be done. Furthermore, a large number of suitable root canal treatment apparatuses, cutting tools, drive sequences and the like have been developed in accordance with such various root canal shapes. Thus, each operator needs to make an appropriate choice from among a large number of options for treatment. However, it depends on the operator's experience as to whether an appropriate choice can be made or not. Also, due to developments of the root canal treatment apparatus, the cutting tool, the drive sequence and the like, it is difficult for operators to understand all of new options.

Thus, the present disclosure provides: a root canal treatment support apparatus for supporting a root canal treatment apparatus by appropriately providing an operator with information related to root canal treatment; a medium having a program recorded thereon; and a root canal treatment support system including the root canal treatment support apparatus and the medium. The configuration of the root canal treatment support apparatus may be included in the root canal treatment apparatus. Specifically, the root canal treatment support apparatus is configured to specify a classification of a root canal shape of a tooth and output information related to root canal treatment based on the specified classification. In this case, the information related to root canal treatment may be any information as long as the information is required by an operator for root canal treatment. For example, the information related to root canal treatment includes information about an appropriate root canal treatment apparatus, an appropriate cutting tool, an appropriate drive sequence, and the like. The information related to root canal treatment may of course include information about a procedure for root canal treatment, a method of operating the root canal treatment support apparatus, advice from other operators, and the like.

As the root canal treatment support apparatus outputs the information related to root canal treatment suitable to the root canal shape of a tooth, the operator can perform appropriate root canal treatment while the time required to select a root canal treatment apparatus, a cutting tool and a drive sequence can be shortened. Also, as the root canal treatment support apparatus updates information related to root canal treatment through an external network, the latest information about the root canal treatment apparatus, the cutting tool and the drive sequence can always be obtained. Furthermore, the root canal treatment support apparatus may be able to update the information related to root canal treatment to more appropriate information through machine learning by feedback of the result of root canal treatment.

The summary of the present disclosure as described above will be hereinafter described as further specific embodiments with reference to the accompanying drawings.

### (First Embodiment)

The root canal treatment support system according to the first embodiment includes: an image diagnostic apparatus configured to image a root canal of a tooth; a root canal treatment support apparatus configured to support root canal treatment based on image information from the image diagnostic apparatus; and a root canal treatment apparatus configured to use the information from the root canal treatment support apparatus. The root canal treatment support system does not have to include an image diagnostic apparatus but may be configured to cause the root canal treatment support apparatus to read image information about a root canal of a tooth from a server or the like. In this case, the image diagnostic apparatus may be an apparatus capable of imaging image information by which the root canal treatment support apparatus can specify a classification of the root canal shape. For example, the image diagnostic apparatus is an X-ray computed tomography (CT) image diagnostic apparatus, an ultrasonic image diagnostic apparatus, an optical coherence tomography (OCT) image diagnostic apparatus, and the like.

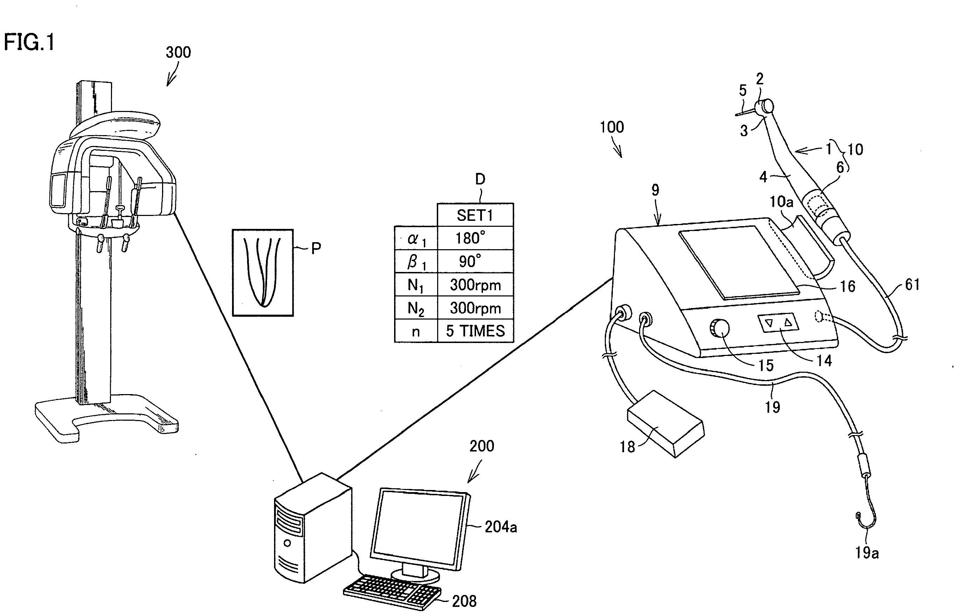

Fig. 1 is a schematic diagram showing the configuration of a root canal treatment support system according to the present first embodiment. The root canal treatment support system shown in Fig. 1 includes a root canal treatment apparatus 100, a root canal treatment support apparatus 200, and an image diagnostic apparatus 300. Image diagnostic apparatus 300 is an X-ray image diagnostic apparatus, for example, and configured to image a root canal of a tooth and transmit the obtained image information P to root canal treatment support apparatus 200. Root canal treatment support apparatus 200 is configured to accept image information P transmitted from image diagnostic apparatus 300, specify a classification of the root canal shape based on image information P, and output information D related to root canal treatment to root canal treatment apparatus 100 based on the specified classification. Root canal treatment apparatus 100 controls driving of the cutting tool based on the drive sequence included in information D related to root canal treatment, for example.

In the root canal treatment support system, root canal treatment apparatus 100 and root canal treatment support apparatus 200 are connected to each other in a wired manner while root canal treatment support apparatus 200 and image diagnostic apparatus 300 are connected to each other in a wired manner. In the root canal treatment support system, however, root canal treatment apparatus 100 and root canal treatment support apparatus 200 may be wirelessly connected to each other while root canal treatment support apparatus 200 and image diagnostic apparatus 300 may be wirelessly connected to each other. Furthermore, root canal treatment apparatus 100 and root canal treatment support apparatus 200 does not necessarily have to be directly connected but may be indirectly connected through a server and the like. Also, root canal treatment support apparatus 200 and image diagnostic apparatus 300 does not necessarily have to be directly connected but may be indirectly connected through a server and the like. Furthermore, information D may be transferred by a person from root canal treatment support apparatus 200 to root canal treatment apparatus 100. For example, a display device 204a of root canal treatment support apparatus 200 may show information D related to root canal treatment, which may be visually checked by a person who then may input the value of information D into root canal treatment apparatus 100. Furthermore, image information P may also be transferred by a person from image diagnostic apparatus 300 to root canal treatment support apparatus 200. For example, image information P stored in image diagnostic apparatus 300 may be copied to a recording medium. Then, a person may cause root canal treatment support apparatus 200 to read image information P from the recording medium.

### [Configuration of Root Canal Treatment Apparatus]

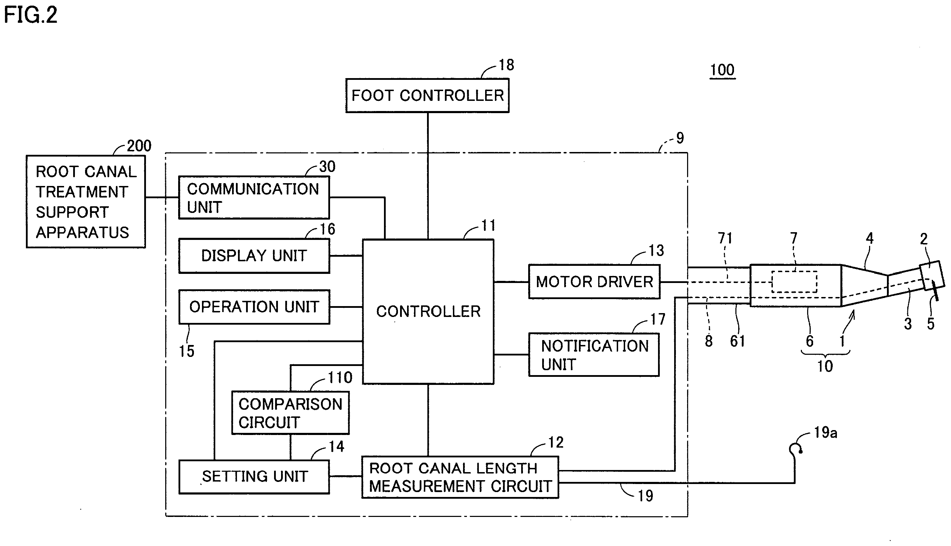

Then, the configuration of root canal treatment apparatus 100 will be hereinafter described in greater detail. Fig. 2 is a block diagram showing the configuration of a root canal treatment apparatus according to the present first embodiment. The configuration of the external appearance of root canal treatment apparatus 100 is shown in Fig. 1.

Root canal treatment apparatus 100 includes a handpiece 1 provided with: a head 2, a neck portion 3 small in diameter and continuous to head 2, and a grip portion 4 continuous to neck portion 3 and gripped with a hand and fingers. A motor unit 6 for rotatably driving a cutting tool 5 (a file or a reamer) held at head 2 is removably connected to a base portion of grip portion 4. A dental instrument 10 is configured with motor unit 6 being coupled to handpiece 1.

As shown in Fig. 2, motor unit 6 includes therein a micromotor 7 and is coupled to a control box 9 through a power supply lead 71 through which power is supplied to micromotor 7 and a hose 61 containing a signal lead 8 through which a signal is transmitted to a root canal length measurement circuit 12. Signal lead 8 is a part of a conductor electrically connected to cutting tool 5 through motor unit 6 and handpiece 1 and transmitting an electric signal. Cutting tool 5 serves as one electrode of root canal length measurement circuit 12.

Control box 9 includes a controller 11, a comparison circuit 110, a root canal length measurement circuit 12, a motor driver 13, a setting unit 14, an operation unit 15, a display unit 16, a notification unit 17, a communication unit 30, and the like. As shown in Fig. 1, control box 9 is equipped on its body side portion with a holder 10a for holding instrument 10 while the instrument is not used. In control box 9, a foot controller 18 is coupled to controller 11 and a lead 19 is coupled to root canal length measurement circuit 12. Although lead 19 is pulled out of control box 9, it may be pulled out so as to be branched from a point intermediate in hose 61. Lead 19 has a tip end equipped with a mouth cavity electrode 19a that is configured to be placed over a lip of a patient so as to be electrically connected. Mouth cavity electrode 19a serves as the other electrode of root canal length measurement circuit 12. Furthermore, cutting tool 5 serves as a root canal inner electrode electrically connected to root canal length measurement circuit 12 through signal lead 8 provided inside handpiece 1.

Controller 11 is responsible for overall control of the root canal enlargement and the root canal length measurement system and includes a main portion implemented by a microcomputer. Comparison circuit 110, root canal length measurement circuit 12, motor driver 13, setting unit 14, operation unit 15, display unit 16, notification unit 17, foot controller 18, and communication unit 30 are connected to controller 11. Controller 11 controls the rotation direction of cutting tool 5 cutting an object to be cut. Specifically, controller 11 controls drive to any of forward rotation drive for rotating cutting tool 5 clockwise (also called right rotation), reverse rotation drive for rotating cutting tool 5 counterclockwise (also called left rotation), and twist drive (reciprocal drive) for alternately rotating cutting tool 5 clockwise and counterclockwise. The rotation direction of the cutting tool (clockwise or counterclockwise) is assumed to be defined based on the direction from the side of cutting tool 5 attached to head 2 toward the tip end of cutting tool 5. Controller 11 can control drive for rotating cutting tool 5 by changing parameters including an angle of rotation, a rotation speed, or an angular rotation speed (the number of rotations) in the clockwise direction and an angle of rotation, a rotation speed, or an angular rotation speed (the number of rotations) in the counterclockwise direction.

The angle of rotation used herein may be defined by a time period for rotation (also called a time period for drive) when the angular rotation speed (the number of rotations) is constant. The angle of rotation may be defined by an amount associated with drive of cutting tool 5 such as an amount of a drive current or an amount of torque. Although description will be given below with reference to an angle of rotation, it may be replaced with the number of times of rotation. For example, setting the number of rotations of cutting tool 5 at 1/2 rotation is the same in meaning as rotation of cutting tool 5 by 180 degrees. Drive of cutting tool 5 for 0.25 second with the constant rotation speed of cutting tool 5 at 120 rotations per minute is the same in meaning as rotation of cutting tool 5 by 180 degrees. Strictly speaking, for example, correspondence between the time period for rotation in terms of control and the actual angle of rotation may have to be corrected depending on the load applied to the cutting tool or the motor. However, the amount of correction is extremely small and hence it is ignorable in implementing the present invention. In subsequent embodiments, the speed of rotation of cutting tool 5 is represented as the number of rotations. The number of rotations is expressed in a unit of revolutions per minute (rpm).

Comparison circuit 110 is necessary for detecting a load applied to cutting tool 5 and can selectively be provided when detection of the load is necessary. Comparison circuit 110 can compare a load applied to cutting tool 5 and a load set by setting unit 14 at any time point during rotation of cutting tool 5 clockwise or counterclockwise by motor driver 13.

Root canal length measurement circuit 12 is necessary for detecting a position of a tip end of cutting tool 5 inside a root canal, and can selectively be provided when detection of the position is necessary. Root canal length measurement circuit 12 forms a closed circuit including: cutting tool 5 inserted into a root canal of a tooth and defined as one electrode; and mouth cavity electrode 19a placed over a lip of a patient and defined as the other electrode. Root canal length measurement circuit 12 can measure a distance from a position of a root apex of a tooth to the tip end of cutting tool 5 by measuring an impedance between cutting tool 5 and mouth cavity electrode 19a by applying a measurement voltage across cutting tool 5 and mouth cavity electrode 19a. When root canal length measurement circuit 12 detects the tip end of cutting tool 5 reaching the position of the root apex, an amount of insertion of the cutting tool, that is, the distance from a root canal opening to the tip end of the cutting tool, can be defined as a root canal length. An electric root canal length measurement method for measuring a root canal length by measuring an impedance between cutting tool 5 and mouth cavity electrode 19a has been known, and all known electric root canal length measurement methods are applicable to root canal treatment apparatus 100 according to the first embodiment.

Motor driver 13 is connected to micromotor 7 through power supply lead 71 and controls power supplied to micromotor 7 based on a control signal from controller 11. Motor driver 13 can control a direction of rotation, the number of rotations, and an angle of rotation of micromotor 7, that is, a direction of rotation, the number of rotations and an angle of rotation of cutting tool 5, by controlling power supplied to micromotor 7.

Setting unit 14 sets the reference for controlling a direction of rotation, the number of rotations and an angle of rotation of cutting tool 5. Setting unit 14 sets a reference load to be compared by comparison circuit 110 with a load applied to cutting tool 5 (a reference for switching a parameter of a drive pattern or a drive sequence, for stopping driving, and the like), timing and the like. Also, using root canal length measurement circuit 12, setting unit 14 can set in advance a position of a root apex and a position at a prescribed distance from the position of the root apex each as a reference position (a reference for switching a parameter of a drive pattern or a drive sequence, for stopping driving, and the like). Root canal treatment apparatus 100 can change parameters including a direction of rotation, the number of rotations, and an angle of rotation of cutting tool 5 or can stop driving when the tip end of cutting tool 5 reaches the root apex position and the reference position, by setting the root apex position and the reference position in advance with setting unit 14.

Operation unit 15 sets parameters including the number of rotations and an angle of rotation of cutting tool 5 and can also set selection as to whether or not to measure a root canal length. Operation unit 15 can allow manual switching between forward rotation drive and reverse rotation drive or switching between forward rotation drive and twist drive.

Display unit 16 shows a position of the tip end of cutting tool 5 inside a root canal or a direction of rotation, the number of rotations and an angle of rotation of cutting tool 5. Also, display unit 16 shows setting details in setting unit 14. Display unit 16 can also show information given from notification unit 17 to an operator. Furthermore, display unit 16 can show the specified classification of the root canal shape and the obtained analysis information about the root canal shape, which will be described later.

Notification unit 17 gives a notification about the state of drive of cutting tool 5 currently controlled by controller 11 through light, sound, or vibration. Specifically, notification unit 17 is provided with a light emitting diode (LED), a speaker, or an oscillator as necessary for giving a notification about the state of drive of cutting tool 5, and changes a color of the LED emitting light or changes sound output from the speaker between forward rotation drive and reverse rotation drive. When display unit 16 can show the state of drive of cutting tool 5 to an operator, notification unit 17 does not have to separately include an LED, a speaker, or an oscillator.

Foot controller 18 serves as an operation unit with which drive and control of cutting tool 5 by micromotor 7 is applied through a stepping operation. Drive and control of cutting tool 5 by micromotor 7 is not limited to drive and control with foot controller 18. An operation switch (not shown) may be provided in grip portion 4 of handpiece 1 and cutting tool 5 may be driven and controlled by using both of the operation switch and foot controller 18. For example, when root canal length measurement circuit 12 detects insertion of cutting tool 5 into a root canal while an operation to step on foot controller 18 is performed, rotation of cutting tool 5 may be started.

Communication unit 30 communicates with root canal treatment support apparatus 200 to receive information D related to root canal treatment from root canal treatment support apparatus 200. Specifically, communication unit 30 receives the information about the drive sequence as information D related to root canal treatment and outputs the drive sequence to controller 11. Controller 11 controls cutting tool 5 to be driven based on the drive sequence received by communication unit 30. The drive sequence includes information such as an angle of rotation in the cutting direction, the number of cutting rotations, an angle of rotation in the non-cutting direction, and the number of non-cutting rotations. Information D transmitted from root canal treatment support apparatus 200 to communication unit 30 may be the drive sequence itself or may be information based on which the drive sequence is specified. In other words, when a plurality of drive sequences are stored in advance in controller 11, information D to be transmitted from root canal treatment support apparatus 200 to communication unit 30 is identification information (for example, the sequence number and the like) used for specifying the stored drive sequence.

Root canal treatment apparatus 100 shown in Fig. 1 has been described with regard to the configuration in which handpiece 1 is coupled to control box 9 through hose 61, but the present invention is not limited thereto and root canal treatment apparatus 100 may be configured as a root canal treatment apparatus of a cordless type. The root canal treatment apparatus of a cordless type incorporates a battery pack, a micromotor and a control system that corresponds to a control box in the grip portion of the handpiece, with various operation units being provided on a surface of the grip portion. The root canal treatment apparatus of a cordless type further includes a display unit in the grip portion. Thus, without greatly changing a line of sight, an operator can check information such as whether cutting tool 5 is driven in the cutting direction or in the non-cutting direction, where cutting tool 5 is currently located, how much load is applied to cutting tool 5, or how high the number of rotations is. Even the root canal treatment apparatus of a cordless type may be configured such that a root canal length measurement circuit for measuring the impedance between cutting tool 5 and mouth electrode 19a is included inside handpiece 1 and mouth electrode 19a provided at the end of lead 19 for a mouth electrode is pulled out from the grip portion through signal lead 8 provided inside handpiece 1, thereby allowing measurement of the root canal length.

Also, control box 9 of root canal treatment apparatus 100 may be incorporated in a tray table or a side table placed at a side portion of a dental treatment couch or may be incorporated in the treatment couch.

### [Configuration of Root Canal Treatment Support Apparatus]

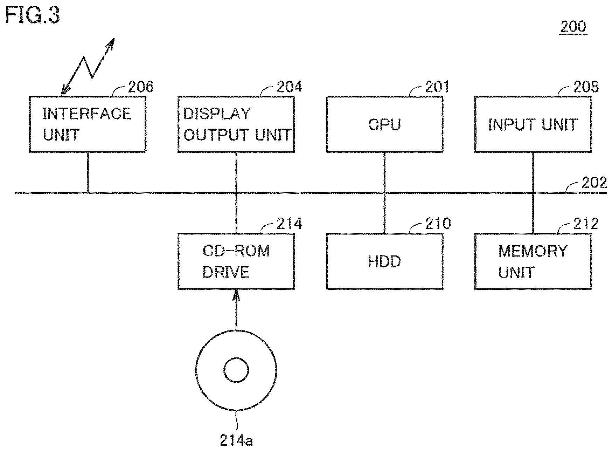

Then, root canal treatment support apparatus 200 will be described in detail. Fig. 3 is a block diagram showing the hardware configuration of root canal treatment support apparatus 200 according to the present first embodiment. Root canal treatment support apparatus 200 includes: a CPU 201 executing various programs including an operating system (OS); a memory unit 212 in which data required to execute the program in CPU 201 is temporarily stored; and a hard disk drive (HDD) 210 in which the program executed by CPU 201 is stored in a non-volatile manner. Furthermore, a program for implementing root canal treatment support is stored in advance in hard disk drive 210. Such a program is read by a CD-ROM drive 214 or the like from a storage medium such as a compact disk-read only memory (CD-ROM) 214a.

CPU 201 receives an instruction from a user or the like through an input unit 208 such as a keyboard or a mouse, and executes the program to output information D related to root canal treatment and the like to display device 204a through display output unit 204. The above-mentioned components are connected to one another through a bus 202. Interface unit 206 is connected to communication unit 30 of root canal treatment apparatus 100.

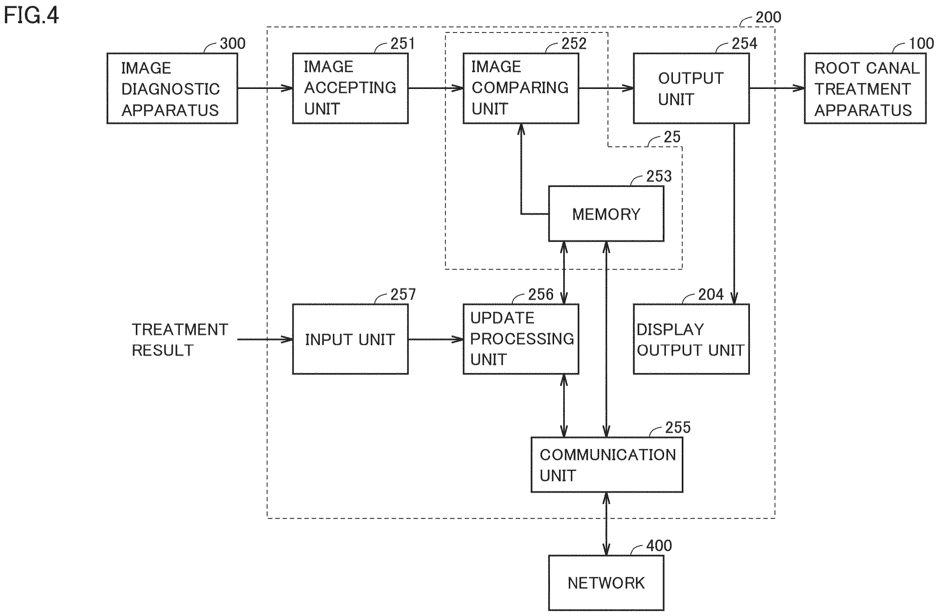

Then, the process of root canal treatment support performed in root canal treatment support apparatus 200 having the hardware configuration shown in Fig. 3 will be hereinafter described. Fig. 4 is a block diagram for illustrating the configuration of root canal treatment support apparatus 200 according to the present first embodiment. Root canal treatment support apparatus 200 includes an image accepting unit 251, an image comparing unit 252, a memory 253, an output unit 254, a display output unit 204, a communication unit 255, an update processing unit 256, and an input unit 208.

Image accepting unit 251 accepts image information P of a root canal of a tooth imaged by image diagnostic apparatus 300. Image accepting unit 251 outputs the accepted image information P to image comparing unit 252. Image comparing unit 252 compares image information P accepted by image accepting unit 251 with the image information for each classification of the root canal shape stored in memory 253 to specify a classification of the root canal shape of image information P. In other words, image comparing unit 252 serves as a classification specification unit for specifying a classification of the root canal shape based on image information P accepted by image accepting unit 251. Based on two images superimposed on one another, image comparing unit 252 detects whether these two images are the same or not, and then, specifies the classification of the image information including a greater number of identical parts as a classification of the accepted image information P. In image comparing unit 252, it becomes possible to apply every known method such as pattern matching for conducting a search for checking whether a specific shape pattern that can be regarded as being the same as the reference image stored in memory 253 exists in the accepted image information P or not.

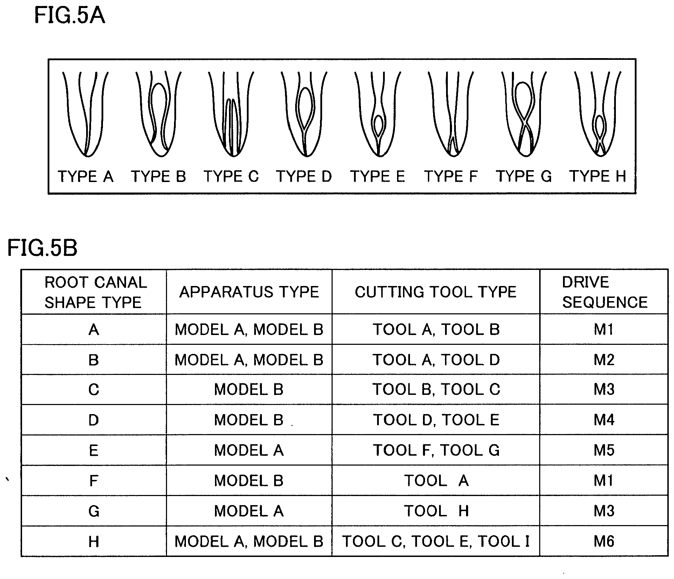

Memory 253 stores information related to the root canal shape type. Figs. 5A and 5B each are a diagram for illustrating an example of the information related to the root canal shape type. Fig. 5A shows image information for each type (classification) of the root canal shape such as root canal shapes of type A to type H. There are proposals of various classifications as a classification of the root canal shape. A classification of four types (for example, Weine's classification for root canal configuration) and a classification of eight types (for example, Vertucci's classification for root canal configuration) are known. Furthermore, the classification of the root canal shape shown in Fig. 5A is mainly based on the congenital shape of the root canal, but may include root canal shapes changed in a posteriori manner such that the root canal becomes clogged due to calcification, the root canal is fractured, pus accumulating in a root apex causes a radicular cyst, and the like.

Fig. 5B shows the setting information for each root canal shape type, in which an appropriate apparatus type, an appropriate cutting tool type and an appropriate drive sequence are set for each type. For example, in the case of root canal shape type A, the setting information shows model A and model B as an apparatus type, tool A and tool B as a cutting tool type, and M1 as a drive sequence. In the case of root canal shape type E, the setting information shows model A as an apparatus type, tool F and tool G as a cutting tool type, and M5 as a drive sequence.

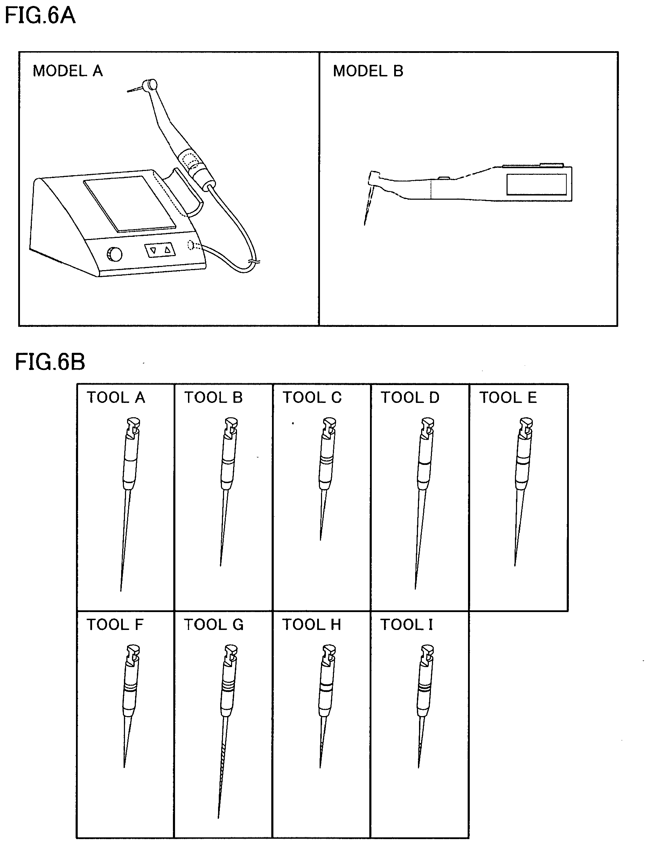

Image comparing unit 252 also serves as a selection unit configured to specify the type of the root canal shape in image information P based on the classification of the root canal shape shown in Fig. 5A, to select information related to root canal treatment from memory 253 based on the specified classification. Image comparing unit 252 and memory 253 form an information generation unit 25 configured to generate information related to root canal treatment suitable to the root canal shape based on image information P accepted by image accepting unit 251. Based on the specified root canal shape type, image comparing unit 252 selects an appropriate apparatus type, an appropriate cutting tool type and an appropriate drive sequence from the setting information shown in Fig. 5B, selects information D related to root canal treatment, and then, transfers the selected information to output unit 254. Among information D related to root canal treatment, output unit 254 outputs the information about an appropriate apparatus type and an appropriate cutting tool type to display device 204a through display output unit 204, for example. Figs. 6A and 6B each are a diagram for illustrating an example of information D related to root canal treatment. Display device 204a shows the information about the apparatus type shown in Fig. 6A and the cutting tool type shown in Fig. 6B. For example, in the case of root canal shape type A, model A of the root canal treatment apparatus of a corded type and model B of the root canal treatment apparatus of a cordless type are displayed as apparatus types. The model of the root canal treatment apparatus can be selected from between the model having an additional root canal length measurement function and the model not having this additional function.

Furthermore, tool A and tool B are displayed as a cutting tool type. In the case of root canal shape type E, display device 204a shows only model A as an apparatus type, and shows tool F and tool G as a cutting tool type. Furthermore, various types of cutting tools need to be used for different purposes depending on the material, the length, the diameter, and the cutting manner of the blade (as to whether cutting can be done in the forward rotation or the reverse rotation, and as to whether cutting is done by vibration or not). Also, the cutting tools are different in performance as to how far it can be curved along the curve of the root canal. Generally, the root canal tool is fabricated using a superelastic material made of a nickel-titanium alloy. Accordingly, even in the case of a curved root canal, the root canal tool can be rotated along the curve of the root canal to thereby cut the root canal. Furthermore, there are many operation methods in which an operation is performed using a plurality of cutting tools starting from a thinner cutting tool that is sequentially exchanged with a thicker cutting tool. However, there is also an operation method in which an operation is performed using one cutting tool. When this latter operation method is selected, display device 204a may be configured to show a cutting tool type suitable to each operation method.

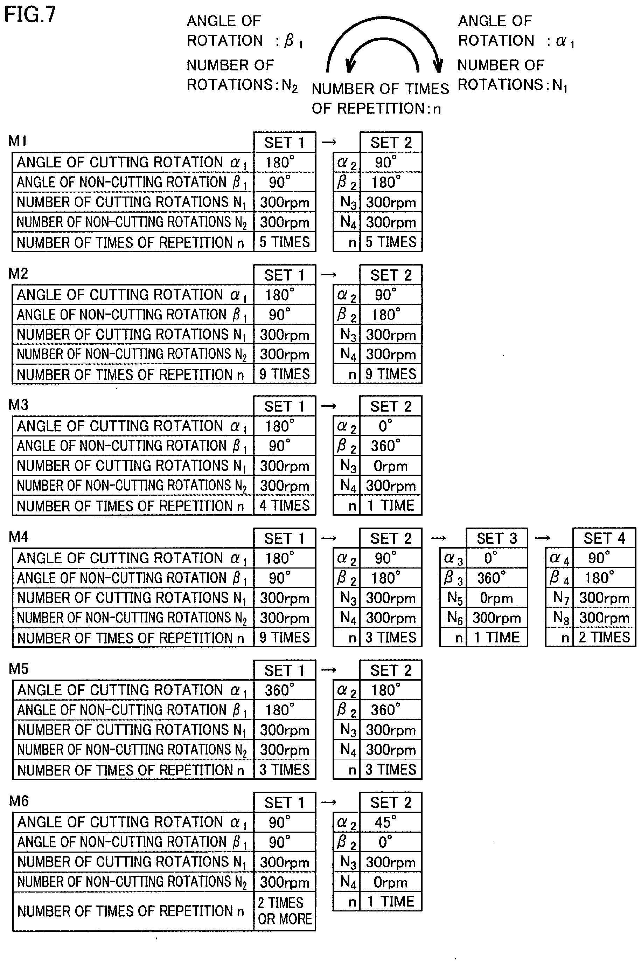

Output unit 254 outputs, for example, the information about the drive sequence among information D related to root canal treatment to root canal treatment apparatus 100 connected thereto. In root canal treatment apparatus 100, cutting tool 5 attached to head 2 is driven according to the drive sequence. The drive sequence includes at least one drive pattern. Fig. 7 is a diagram showing an example of a drive sequence controlled by the root canal treatment apparatus. Although Fig. 7 shows exemplary six drive sequences including a drive sequence M1 to a drive sequence M6, the present invention is not limited thereto and other drive sequences may be applicable. In the table shown in Fig. 7, in SET1, an angle of rotation in the cutting direction is denoted as an angle of cutting rotation α₁, an angle of rotation in the non-cutting direction is denoted as an angle of non-cutting rotation β₁, the number of rotations in the cutting direction is denoted as the number of cutting rotations N₁, and the number of rotations in the non-cutting direction is denoted as the number of non-cutting rotations N₂. Similarly, in SET2, an angle of rotation in the cutting direction is denoted as an angle of cutting rotation α₂, an angle of rotation in the non-cutting direction is denoted as an angle of non-cutting rotation β₂, the number of rotations in the cutting direction is denoted as the number of cutting rotations N₃, and the number of rotations in the non-cutting direction is denoted as the number of non-cutting rotations N₄. In SET3, an angle of rotation in the cutting direction is denoted as an angle of cutting rotation α₃, an angle of rotation in the non-cutting direction is denoted as an angle of non-cutting rotation β₃, the number of rotations in the cutting direction is denoted as the number of cutting rotations N₅, and the number of rotations in the non-cutting direction is denoted as the number of non-cutting rotations N₆. In SET4, an angle of rotation in the cutting direction is denoted as an angle of cutting rotation α₄, an angle of rotation in the non-cutting direction is denoted as an angle of non-cutting rotation β₄, the number of rotations in the cutting direction is denoted as the number of cutting rotations N₇, and the number of rotations in the non-cutting direction is denoted as the number of non-cutting rotations N₈.

Specifically, in the drive pattern adopted in SET1 in drive sequence M4, angle of rotation α₁ in the cutting direction is set to 180 degrees, the number of cutting rotations N₁ is set to 300 rpm, angle of rotation β₁ in the non-cutting direction is set to 90 degrees, the number of non-cutting rotations N₂ is set to 300 rpm, and the number of times of repetition is set to 9. In the drive pattern adopted in SET2, angle of rotation α₂ in the cutting direction is set to 90 degrees, the number of cutting rotations N₃ is set to 300 rpm, angle of rotation β₂ in the non-cutting direction is set to 180 degrees, the number of non-cutting rotations N₄ is set to 300 rpm, and the number of times of repetition is set to 3. In the drive pattern adopted in SET3, angle of rotation α₃ in the cutting direction is set to 0 degree, the number of cutting rotations N₅ is set to 0 rpm, angle of rotation β₃ in the non-cutting direction is set to 360 degrees, the number of non-cutting rotations N₆ is set to 300 rpm, and the number of times of repetition is set to 1. In the drive pattern adopted in SET4, angle of rotation α₄ in the cutting direction is set to 90 degrees, the number of cutting rotations N₇ is set to 300 rpm, angle of rotation β₄ in the non-cutting direction is set to 180 degrees, the number of non-cutting rotations N₈ is set to 300 rpm, and the number of times of repetition is set to 2.

In drive sequence M4, a root canal is cut mainly in the drive pattern adopted in SET1, drive under the balanced force technique is performed in the drive patterns adopted in SET2 and SET4 so as to perform cutting and enlargement in conformity with a shape of the root canal, and bite into the inner wall of the root canal is removed in the drive pattern adopted in SET3. In drive sequence M4, as a result of drive under SET1, cutting tool 5 is rotated by 90 degrees × 9 times = 810 degrees in the cutting direction, as a result of drive under SET2, cutting tool 5 is rotated by 90 degrees × 3 times = 270 degrees in the non-cutting direction, as a result of drive under SET3, cutting tool 5 is rotated by 360 degrees in the non-cutting direction, and as a result of drive under SET4, cutting tool 5 is rotated by 90 degrees × 2 times = 180 degrees in the non-cutting direction.

For example, in the case of root canal shape type A, output unit 254 outputs a drive sequence M1 shown in Fig. 7 in the state where root canal treatment apparatus 100 of model A or model B is connected thereto. Furthermore, in the case of root canal shape type E, output unit 254 outputs a drive sequence M5 shown in Fig. 7 in the state where root canal treatment apparatus 100 of model A is connected thereto. In addition, output unit 254 may cause display device 204a to show the information about the drive sequence without outputting this information to root canal treatment apparatus 100. In other words, an operator may visually check the information about the drive sequence displayed on display device 204a and input this information about the drive sequence into root canal treatment apparatus 100.

Referring back to Fig. 4, communication unit 255 is connected to an external network 400. Through external network 400, update processing unit 256 updates the information related to the root canal shape type (see Figs. 5A and 5B) and the information related to root canal treatment (see Figs. 6A and 6B and Fig. 7) that are stored in memory 253. Furthermore, the treatment result of the root canal treatment can be input through input unit 208 into root canal treatment support apparatus 200. Specifically, an operator inputs information such as the apparatus type, the cutting tool type and the drive sequence used in the actual root canal treatment among information D related to root canal treatment such as an apparatus type, a cutting tool type and a drive sequence that are displayed by root canal treatment support apparatus 200. Through feedback of the treatment result input through input unit 208, update processing unit 256 performs known machine learning using functions of artificial intelligence (AI) and deep learning to thereby update the input information to information D related to more appropriate root canal treatment. For example, in the case of root canal shape type A, display device 204a shows tool A and tool B as a cutting tool type. In this case, however, when there are a large number of inputs of treatment results showing that the cutting tool types used in the actual root canal treatment are tool A and tool I, update processing unit 256 updates the information about the cutting tool type to tool A and tool I.

### [Process in Root Canal Treatment Support Apparatus]

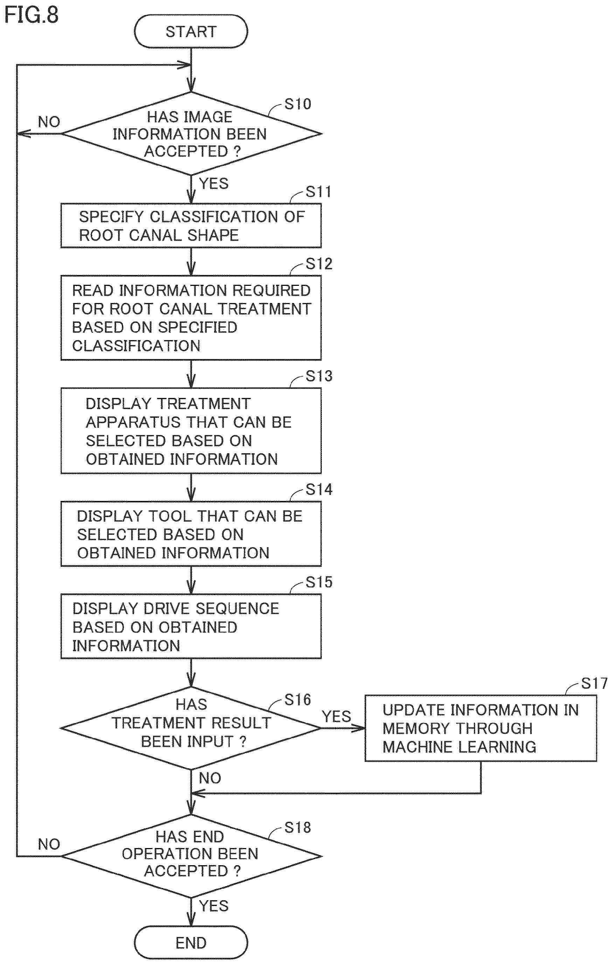

Then, the process in root canal treatment support apparatus 200 will be described with reference to a flowchart. Fig. 8 is a flowchart for illustrating a process in root canal treatment support apparatus 200 according to the present first embodiment. First, CPU 201 (particularly, image accepting unit 251) determines whether image information P about the root canal of a tooth imaged by image diagnostic apparatus 300 has been accepted or not (step S10). When CPU 201 determines that image information P has not been accepted (step S10: NO), CPU 201 returns the process back to step S10 and continues the state of waiting for acceptance of image information P.

When CPU 201 determines that image information P has been accepted (step S10: YES), CPU 201 (particularly, image comparing unit 252) compares accepted image information P with the image information for each classification of the root canal shape stored in memory 253 to specify a classification of the root canal shape in image information P (step S11). CPU 201 (particularly, image comparing unit 252) selects information D related to root canal treatment based on the specified classification of the root canal shape, and then reads the selected information D from memory 253 (step S12).

CPU 201 (particularly, output unit 254) outputs the information about the apparatus type among information D related to root canal treatment read in step S12 to display device 204a, and then, causes display device 204a to show the root canal treatment apparatus that can be selected (step S13). CPU 201 outputs the information about the cutting tool type among information D related to root canal treatment read in step S12 to display device 204a, and then, causes display device 204a to show the tool that can be selected (step S14). CPU 201 outputs, to root canal treatment apparatus 100 connected thereto, the information about the drive sequence among information D related to root canal treatment read in step S12, or outputs the information about the drive sequence to display device 204a and causes display device 204a to show a drive sequence (step S15).

Then, CPU 201 determines whether the treatment result has been input or not through input unit 208 (step S16). When the treatment result has been input (step S16: YES), CPU 201 (particularly, update processing unit 256) updates information D related to root canal treatment in memory 253 through machine learning (step S17). When the treatment result has not been input (step S16: NO), CPU 201 determines whether the operation to end the process of root canal treatment support has been accepted or not (step S18). When the operation to end the process of root canal treatment support has not been accepted (step S18: NO), CPU 201 returns the process back to step S10 and then continues the state of waiting for acceptance of image information P. When the operation to end the process of root canal treatment support has been accepted (step S18: YES), CPU 201 end the process.

As described above, the root canal treatment support system according to the present first embodiment includes root canal treatment support apparatus 200 for providing information that can be used for root canal treatment, and root canal treatment apparatus 100 using the information from root canal treatment support apparatus 200. Root canal treatment support apparatus 200 includes: image accepting unit 251 configured to accept image information obtained by imaging a root canal of a tooth; information generation unit 25 configured to generate information related to root canal treatment suitable to a root canal shape based on image information P accepted by image accepting unit 251; and output unit 254 configured to output the information generated by information generation unit 25. Specifically, information generation unit 25 includes: image comparing unit 252 configured to specify a classification of the root canal shape based on the image information accepted by image accepting unit 251; memory 253 in which information D related to root canal treatment is stored for each classification of the root canal shape; and selection unit (image accepting unit 251) configured to select information D related to root canal treatment from memory 253 based on the classification specified by image comparing unit 252. Root canal treatment apparatus 100 includes handpiece 1 having head 2 at which cutting tool 5 is held in a drivable manner, a drive unit (motor driver 13 and the like) configured to drive cutting tool 5 held at head 2, and controller 11 configured to control the drive unit. Based on the information output from output unit 254, controller 11 controls the drive unit to drive cutting tool 5.

Thus, the root canal treatment support system according to the present first embodiment can output information D related to root canal treatment in accordance with each classification of the root canal shape, and can appropriately support the operator's root canal treatment. Furthermore, in the root canal treatment support system, cutting tool 5 can be driven in the appropriate drive sequence in accordance with each classification of the root canal shape.

Furthermore, image comparing unit 252 compares the image information accepted by image accepting unit 251 with the image information (see Fig. 5A) for each root canal shape type stored in memory 253, to thereby specify the classification of the root canal shape. By comparing two pieces of image information, image comparing unit 252 can specify the classification of the root canal shape with sufficient accuracy.

The process of specifying the classification of the root canal shape is not limited to the process by image comparing unit 252 comparing several pieces of image information as long as the classification of the root canal shape can be specified by any process. For example, the classification specification unit may compare a specific parameter of the root canal shape specified from the image information accepted by image accepting unit 251 with the parameter of the root canal shape in each classification stored in the memory, to thereby specify the classification of the root canal shape.

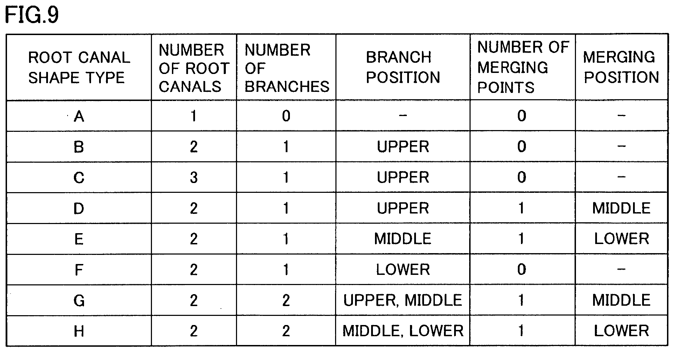

Specifically, the following is an explanation about the case where the number of root canals, the number of branches, the branch position, the number of merging points, and the merging position are employed as parameters of the root canal shape. Fig. 9 is a diagram for illustrating another example of the information related to the root canal shape type. In Fig. 9, the parameters of the root canal shapes of type A to type H shown in Fig. 5A are summarized in a table. For example, root canal shape type A shows parameters of the root canal shape including: the number of root canals as 1; the number of branches as zero; no branch position; the number of merging points as zero; and no merging position. Also, root canal shape type E shows parameters of the root canal shape including: the number of root canals as 2; the number of branches as 1; the branch position as middle; the number of merging points as 1; and the merging position as lower. Regarding the branch position and the merging position included in the parameters of the root canal shape, a tooth is roughly divided into three parts as a lower position, a middle position and an upper position from the gum side.

The parameters of the root canal shape shown in Fig. 9 are stored in advance in memory 253. The classification specification unit provided in place of image comparing unit 252 calculates the number of root canals, the number of branches, the branch position, the number of merging points, and the merging position based on image information P accepted by image accepting unit 251, to thereby specify the specific parameters of the root canal shape. Furthermore, the classification specification unit compares the specific parameters of the root canal shape with the parameters of the root canal shape shown in Fig. 9 to thereby specify the root canal shape pattern. The classification specification unit can specify the root canal shape pattern (classification) only by comparing the parameters without having to compare several pieces of image information, so that the load of the process can be reduced. In addition, the parameters of the root canal shape are not limited to the number of root canals, the number of branches, the branch position, the number of merging points, and the merging position but may be any parameter as long as the root canal shape pattern can be specified thereby. For example, the parameters of the root canal shape may include the cross-sectional shape of the root canal, the diameter of the root canal, the cross-sectional area of the root canal, the curvature (curvature rate) of the root canal, the change rate of the diameter of the root canal relative to the longitudinal direction of the root canal, the change rate of the cross-sectional area of the root canal, and the change rate of the curvature of the root canal.

As information D related to root canal treatment, output unit 254 outputs at least one of: the type information about root canal treatment apparatus 100 that is suitable to the treatment of the root canal having a shape included in the classification specified by image comparing unit 252; and the type information about cutting tool 5 used in root canal treatment apparatus 100. Furthermore, as information D related to root canal treatment, output unit 254 outputs the drive sequence (control information) of root canal treatment apparatus 100 that is suitable to the treatment of the root canal having a shape included in the classification specified by image comparing unit 252. In this case, the drive sequence includes an angle of cutting rotation α₁ as the angle of rotation in the cutting direction, angle of non-cutting rotation β₁ as the angle of rotation in the non-cutting direction, the number of cutting rotations N₁ as the number of rotations in the cutting direction, the number of non-cutting rotations N₂ as the number of rotations in the non-cutting direction; and the like, as shown in Fig. 7. In other words, the drive sequence may include at least one piece of information of: an instruction for a forward rotation; an instruction for a reverse rotation; a stop instruction; the number of rotations; a stop condition; an instruction for a switching interval between a forward rotation and a reverse rotation; and a condition for a reverse rotation, each of which is for cutting tool 5.

Root canal treatment support apparatus 200 includes display device 204a or a sound output unit (not shown). Thus, output unit 254 outputs information D related to root canal treatment to display device 204a or the sound output unit, to cause display device 204a to show the information shown in Figs. 6A and 6B, for example. Furthermore, output unit 254 may output the drive sequence to root canal treatment apparatus 100.

Image information P accepted by image accepting unit 251 is two-dimensional image information or three-dimensional image information obtained by imaging a root canal of a tooth. Image information P is at least any one of an X-ray CT image, an ultrasonic image and an OCT image.

Root canal treatment support apparatus 200 includes communication unit 255 for establishing a connection to external network 400. Thus, based on the information from the external database connected through communication unit 255, information D related to root canal treatment stored in memory 253 can be updated. Furthermore, - root canal treatment support apparatus 200 includes: an input unit 257 through which the information about the treatment result of the root canal treatment performed based on the information output from output unit 254 is input; and an update processing unit 256 for updating information D related to root canal treatment stored in memory 253 through machine learning by using the information about the treatment result input into input unit 257. Thereby, root canal treatment support apparatus 200 can provide an operator with information D related to more appropriate root canal treatment.

### (Second Embodiment)

The root canal treatment apparatus according to the present second embodiment will be hereinafter described with regard to the case where control in root canal treatment apparatus 100 as described in the first embodiment is combined with: control based on the load applied to cutting tool 5; or control based on the position of cutting tool 5 obtained from root canal length measurement circuit 12 (the position of the tip end of cutting tool 5 inside the root canal obtained by root canal length measurement circuit 12). The following explanation about the root canal treatment apparatus will be given with regard to the case where only the control based on the load applied to cutting tool 5 is combined and the case where only the control based on the position of cutting tool 5 is combined, but both controls may be combined. Also, since the root canal treatment apparatus according to the present second embodiment is identical in configuration to root canal treatment apparatus 100 according to the first embodiment, the same reference characters will be used for description, but the detailed description thereof will not be repeated.

When the control based on the load applied to cutting tool 5 is combined, the root canal treatment apparatus detects the load applied to cutting tool 5 in a load detector. Specifically, the root canal treatment apparatus is provided with a load detection resistor inside a circuit of motor driver 13 shown in Fig. 2 to detect the load applied to cutting tool 5 based on the change in resistance value of the load detection resistor. Controller 11 changes the control of the drive unit in accordance with the load applied to cutting tool 5 and detected by the load detector.

The following is an explanation about control based on the load applied to cutting tool 5 with reference to a specific example. Initially, controller 11 reads a first drive sequence set in advance and causes cutting tool 5 to be driven sequentially from the drive pattern adopted in SET1 in the read first drive sequence. For example, controller 11 has drive sequence M2 shown in Fig. 7 set in advance as the first drive sequence and causes cutting tool 5 to be driven in accordance with the drive patterns adopted in SET1 and SET2 in drive sequence M2. As a result of driving under SET1 in drive sequence M2, controller 11 causes cutting tool 5 to rotate by 180 degrees × 9 times = 1620 degrees in the cutting direction, and therefore causes cutting tool 5 to be driven mainly for the purpose of cutting a root canal.

Then, controller 11 obtains a load applied to cutting tool 5 and detected by the load detector. Controller 11 causes the load detector to detect a load applied at the time when cutting tool 5 is driven to rotate in the cutting direction and thereby obtains the detected load. Then, comparison circuit 110 compares the obtained load with a reference load set by setting unit 14. Thus, application of a load more than necessary onto cutting tool 5 as a result of drive in the first drive sequence can be detected and the drive sequence is switched in order to lower the load.

When it is determined that the obtained load is equal to or higher than the reference load, controller 11 reads the second drive sequence and causes cutting tool 5 to be driven sequentially from the drive pattern adopted in SET1 in the read second drive sequence. For example, when a load equal to or higher than the reference load is applied to cutting tool 5, controller 11 switches the sequence to the second drive sequence that is drive sequence M3 shown in Fig. 7 and causes cutting tool 5 to be driven in accordance with the drive patterns adopted in SET1 and SET2 in drive sequence M3. As a result of drive under SET2 in drive sequence M3, controller 11 drives cutting tool 5 to rotate by 360 degrees in the non-cutting direction so as to remove bite into a wall of the root canal, thereby lowering the load applied to cutting tool 5.

Although an example in which the drive sequence itself is switched from the first drive sequence to the second drive sequence is shown, the present invention is not limited thereto. For example, when a load equal to or higher than the reference load is applied to cutting tool 5, controller 11 may change parameters such as an angle of rotation, an angular rotation speed, and the number of times of repetition of the drive pattern adopted in the first drive sequence without switching the drive sequence itself or may perform control for driving in the reverse rotation, a switching interval between the forward rotation and the reverse rotation, or driving to a stop operation.

Then, in combination of the control based on the position of cutting tool 5 obtained from root canal length measurement circuit 12, the root canal treatment apparatus obtains the position of cutting tool 5 obtained in root canal length measurement circuit 12.

The following is an explanation about the control based on the position of cutting tool 5 with reference to a specific example. Initially, controller 11 reads a first drive sequence set in advance and causes cutting tool 5 to be driven sequentially from the drive pattern adopted in SET1 in the read first drive sequence. For example, controller 11 has drive sequence M5 shown in Fig. 7 set in advance as the first drive sequence and causes cutting tool 5 to be driven in accordance with the drive patterns adopted in SET1 and SET2 in drive sequence M5. Specifically, as a result of drive under SET1, controller 11 causes cutting tool 5 to rotate by 360 degrees × 3 times = 1080 degrees in the cutting direction, and therefore causes cutting tool 5 to be driven mainly for the purpose of cutting a root canal.

Then, controller 11 obtains a position of cutting tool 5 by root canal length measurement circuit 12. Controller 11 determines whether or not the position of cutting tool 5 obtained from root canal length measurement circuit 12 has reached a reference position (the position of the cutting tool ≤ the reference position). When it is determined that the obtained position of cutting tool 5 has reached the reference position, controller 11 reads a second drive sequence and causes cutting tool 5 to be driven sequentially from the drive pattern adopted in SET1 in the read second drive sequence. For example, when a position of cutting tool 5 is close to the root apex, controller 11 switches the sequence to the second drive sequence that is drive sequence M6 including twist drive with a small angle of rotation (specifically, angle of rotation α₁ in the cutting direction = 90 degrees and angle of rotation β₁ in the non-cutting direction = 90 degrees) and causes cutting tool 5 to be driven in accordance with the drive patterns adopted in SET1 and SET2 in drive sequence M6.

Although an example of switching of the drive sequence itself from the first drive sequence to the second drive sequence has been illustrated, the present invention is not limited thereto. For example, when controller 11 determines that the reference position has been reached, controller 11 may change parameters such as an angle of rotation, an angular rotation speed, and the number of times of repetition of the drive pattern adopted in the first drive sequence without switching the drive sequence itself or may perform control for driving in the reverse rotation, a switching interval between the forward rotation and the reverse rotation, or driving to a stop operation.

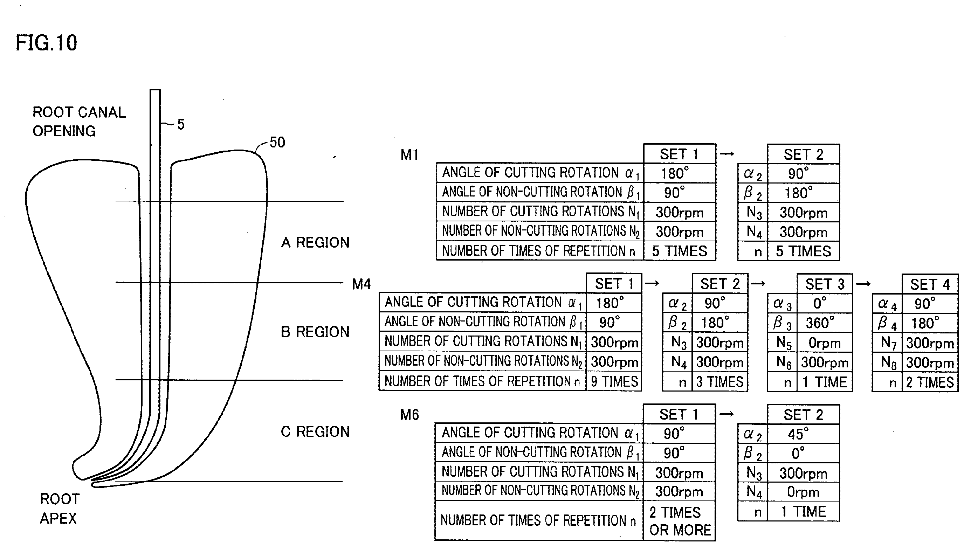

The above description has been made with regard to the control for switching a drive sequence or changing a parameter of a drive pattern included in the drive sequence depending on whether or not a reference position has been reached. The present invention, however, is not limited as such, and the root canal treatment apparatus may carry out control for switching a drive sequence or changing a parameter of a drive pattern included in the drive sequence in accordance with a region resulting from division of a root canal of a tooth into a plurality of regions. Fig. 10 is a diagram for illustrating an example of a drive sequence output in accordance with a region of a root canal in the root canal treatment support apparatus according to the present second embodiment. In a tooth 50 shown in Fig. 10, a root canal from a root canal opening to the root apex is divided into three regions of an A region, a B region, and a C region.

Initially, when the tip end of cutting tool 5 is located within the A region, controller 11 causes cutting tool 5 to be driven in accordance with drive sequence M1 shown in Fig. 7. Specifically, drive sequence M1 includes the drive pattern adopted in SET1 and the drive pattern adopted in SET2. In the drive pattern adopted in SET1, cutting tool 5 is driven with angle of rotation α₁ in the cutting direction being set to 180 degrees, the number of cutting rotations N₁ being set to 300 rpm, angle of rotation β₁ in the non-cutting direction being set to 90 degrees, the number of non-cutting rotations N₂ being set to 300 rpm, and the number of times of repetition being set to 5. In the drive pattern adopted in SET2, cutting tool 5 is driven with angle of rotation α₂ in the cutting direction being set to 90 degrees, the number of cutting rotations N₃ being set to 300 rpm, angle of rotation β₂ in the non-cutting direction being set to 180 degrees, the number of non-cutting rotations N₄ being set to 300 rpm, and the number of times of repetition being set to 5. In drive sequence M1, as a result of drive under SET1, cutting tool 5 is rotated by 180 degrees × 5 times = 900 degrees in the cutting direction and cutting tool 5 is driven mainly for the purpose of cutting a root canal. In the A region close to the opening of the root canal, the root canal is large in diameter and curved to a lesser extent. Therefore, controller 11 causes cutting tool 5 to be driven in accordance with drive sequence M1 that is relatively high in cutting efficiency.

Then, when the tip end of cutting tool 5 is located within the B region, controller 11 causes cutting tool 5 to be driven in accordance with drive sequence M4 shown in Fig. 7. Specifically, drive sequence M4 includes four patterns including the drive pattern adopted in SET1 to the drive pattern adopted in SET4. In the drive pattern adopted in SET1, cutting tool 5 is driven with angle of rotation α₁ in the cutting direction being set to 180 degrees, the number of cutting rotations N₁ being set to 300 rpm, angle of rotation β₁ in the non-cutting direction being set to 90 degrees, the number of non-cutting rotations N2 being set to 300 rpm, and the number of times of repetition being set to 9. In the drive pattern adopted in SET2, cutting tool 5 is driven with angle of rotation α₂ in the cutting direction being set to 90 degrees, the number of cutting rotations N₃ being set to 300 rpm, angle of rotation β₂ in the non-cutting direction being set to 180 degrees, the number of non-cutting rotations N₄ being set to 300 rpm, and the number of times of repetition being set to 3. In the drive pattern adopted in SET3, cutting tool 5 is driven with angle of rotation α₃ in the cutting direction being set to 0 degree, the number of cutting rotations N₅ being set to 0 rpm, angle of rotation β₃ in the non-cutting direction being set to 360 degrees, the number of non-cutting rotations N₆ being set to 300 rpm, and the number of times of repetition being set to 1. In the drive pattern adopted in SET4, cutting tool 5 is driven with angle of rotation α₄ in the cutting direction being set to 90 degrees, the number of cutting rotations N₇ being set to 300 rpm, angle of rotation β₄ in the non-cutting direction being set to 180 degrees, the number of non-cutting rotations Ng being set to 300 rpm, and the number of times of repetition being set to 2. In the B region, the root canal gradually becomes smaller in diameter and starts to curve. The B region, however, is still distant from the position of the root apex. Thus, controller 11 causes cutting tool 5 to be driven in accordance with drive sequence M4 in conformity with the shape of the root canal in consideration of cutting efficiency.

Then, when the tip end of cutting tool 5 is located within the C region, controller 11 causes cutting tool 5 to be driven in accordance with drive sequence M6 shown in Fig. 7. Specifically, drive sequence M18 includes the drive pattern adopted in SET1 and the drive pattern adopted in SET2. In the drive pattern adopted in SET1, cutting tool 5 is driven with angle of rotation α₁ in the cutting direction being set to 90 degrees, the number of cutting rotations N₁ being set to 300 rpm, angle of rotation β₁ in the non-cutting direction being set to 90 degrees, the number of non-cutting rotations N₂ being set to 300 rpm, and the number of times of repetition being set to 2 or more. In the drive pattern adopted in SET2, cutting tool 5 is driven with angle of rotation α₂ in the cutting direction being set to 45 degrees, the number of cutting rotations N₃ being set to 300 rpm, angle of rotation β₂ in the non-cutting direction being set to 0 degree, the number of non-cutting rotations N₄ being set to 0 rpm, and the number of times of repetition being set to 1. In drive sequence M6, cutting tool 5 is twist-driven at an angle of rotation in the cutting direction smaller than those in other regions (for example, 90 degrees). In the C region close to the root apex, the root canal is small in diameter and greatly curved. Therefore, controller 11 causes cutting tool 5 to be driven in accordance with drive sequence M6 in which a load onto cutting tool 5 is lower, rather than importance being placed on cutting efficiency.

Although the above description has been given with reference to an example in which controller 11 switches the drive sequence itself in accordance with a region where the tip end of cutting tool 5 is located, the present invention is not limited thereto. For example, controller 11 may change parameters such as an angle of rotation, an angular rotation speed, and the number of times of repetition of the drive pattern adopted in the drive sequence in accordance with a region where the tip end of cutting tool 5 is located, without switching the drive sequence itself.

As described above, the root canal treatment apparatus according to the present second embodiment includes the load detector for detecting a load applied to cutting tool 5. Controller 11 changes the control of the drive unit in accordance with the load applied to cutting tool 5 and detected by the load detector. Specifically, when the load applied to the cutting tool and detected by the load detector is equal to or greater than a reference load, controller 11 performs control for driving in the reverse rotation, a switching interval between the forward rotation and the reverse rotation, or driving to a stop operation. The root canal treatment support apparatus may set information D related to root canal treatment output to the root canal treatment apparatus to include information such as a reference load, and a drive sequence at the time when the load is equal to or greater than the reference load.

The root canal treatment apparatus according to the present second embodiment includes root canal length measurement circuit 12 for detecting the position of the tip end of cutting tool 5 located inside the root canal and obtained by electrical root canal length measurement. Controller 11 changes the control of the drive unit in accordance with the position detected by root canal length measurement circuit 12. Specifically, when the position detected by root canal length measurement circuit 12 reaches a reference position, controller 11 performs control for driving in the reverse rotation, a switching interval between the forward rotation and the reverse rotation, or driving to a stop operation. In addition, the root canal treatment support apparatus may set information D related to root canal treatment output to the root canal treatment apparatus to include information such as a reference position and a drive sequence at the time of reaching the reference position.

### (Third Embodiment)

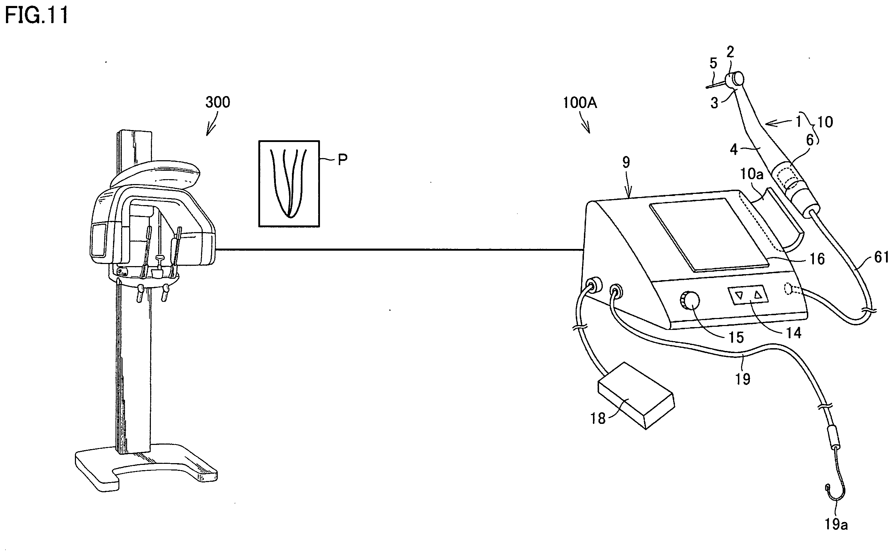

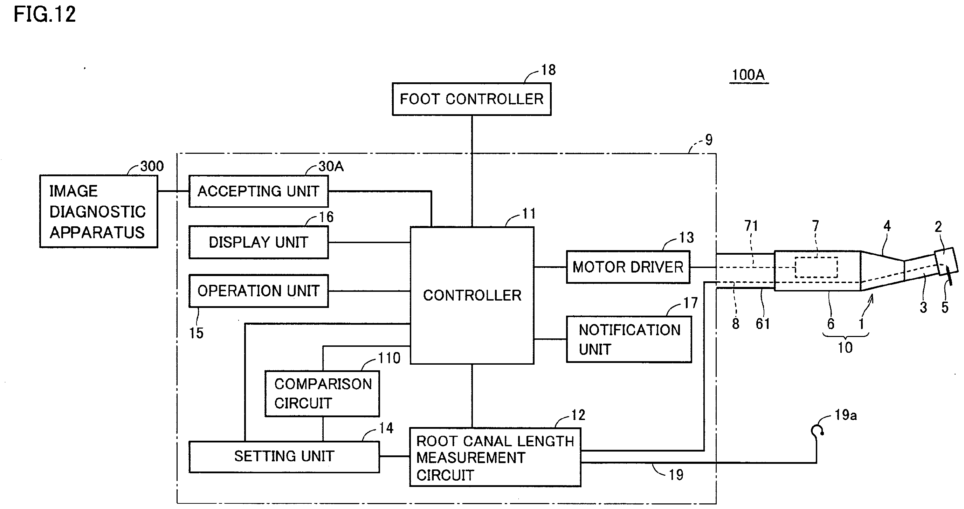

The root canal treatment apparatus according to the present second embodiment will be described with regard to the case where root canal treatment apparatus 100 as described in the first embodiment includes the configuration of root canal treatment support apparatus 200. Fig. 11 is a schematic diagram showing the configuration of a root canal treatment apparatus 100A according to the present third embodiment. Fig. 12 is a block diagram showing the configuration of root canal treatment apparatus 100A according to the present third embodiment. In addition, the same configuration of the root canal treatment apparatus according to the present third embodiment as the configuration of root canal treatment apparatus 100 according to the first embodiment will be described using the same reference characters and the detailed description thereof will not be repeated.

Root canal treatment apparatus 100A shown in Fig. 11 receives image information P obtained by imaging a root canal of a tooth by image diagnostic apparatus 300 as an X-ray image diagnostic apparatus, for example. In root canal treatment apparatus 100A, information D related to root canal treatment is selected in accordance with the classification of the root canal shape specified from image information P received from image diagnostic apparatus 300, and driving of cutting tool 5 is controlled based on information D.

Root canal treatment apparatus 100A and image diagnostic apparatus 300 are connected to each other in a wired manner. However, root canal treatment apparatus 100 and image diagnostic apparatus 300 may be wirelessly connected. Furthermore, root canal treatment apparatus 100 and image diagnostic apparatus 300 does not necessarily have to be directly connected but may be indirectly connected through a server and the like. Furthermore, image information P may also be transferred by a person from image diagnostic apparatus 300 to root canal treatment apparatus 100A. For example, image information P stored in image diagnostic apparatus 300 may be copied to a recording medium. Then, a person may cause root canal treatment apparatus 100A to read image information P from the recording medium.

### [Configuration of Root Canal Treatment Support Apparatus]

Then, the configuration of root canal treatment apparatus 100A will be descried in greater detail. Root canal treatment apparatus 100A is identical in configuration to root canal treatment apparatus 100 except that an accepting unit 30A is provided in place of communication unit 30 provided in root canal treatment apparatus 100 shown in Fig. 2. Accepting unit 30A is connected to image diagnostic apparatus 300 to accept image information P transmitted from image diagnostic apparatus 300. Controller 11 has a part of the configuration of root canal treatment support apparatus 200 shown in Fig. 4 and is configured to specify the classification of the root canal shape from image information P accepted by accepting unit 30A and select information D related to root canal treatment in accordance with the classification of the specified root canal shape. Furthermore, controller 11 drives cutting tool 5 based on the drive sequence included in the selected information D.

Specifically, controller 11 of root canal treatment apparatus 100A includes image comparing unit 252, memory 253, output unit 254, and update processing unit 256 that are shown in Fig. 4. In addition, accepting unit 30A of root canal treatment apparatus 100A corresponds to image accepting unit 251 shown in Fig. 4. Operation unit 15 and display unit 16 in root canal treatment apparatus 100A correspond to input unit 208 and display output unit 204, respectively, that are shown in Fig. 4. Also, root canal treatment apparatus 100A may include a communication unit for establishing a connection to external network 400.

### [Process in Root Canal Treatment Apparatus]

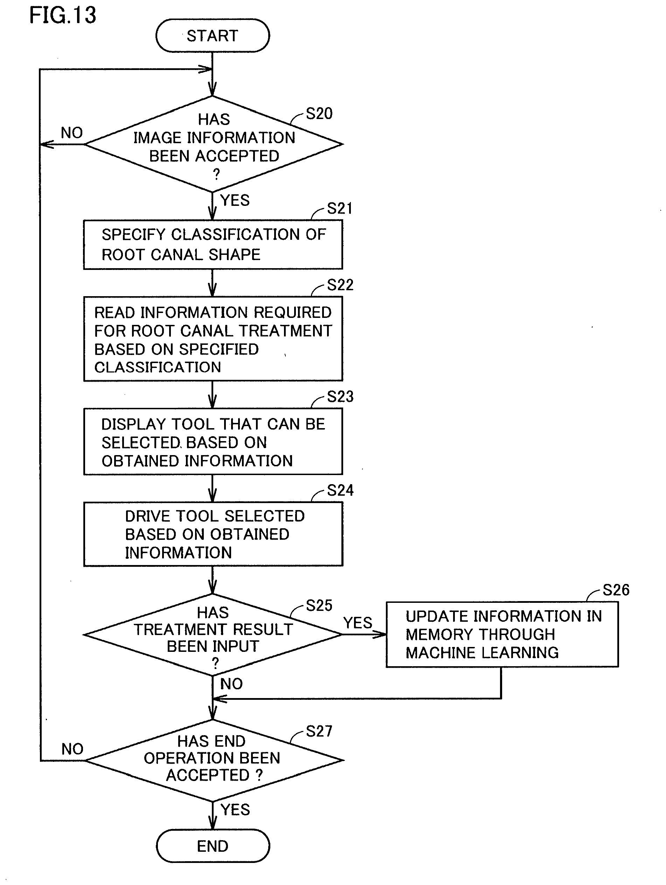

Then, the process in root canal treatment apparatus 100A will be described with reference to a flowchart. Fig. 13 is a flowchart for illustrating a process in root canal treatment apparatus 100A according to the present third embodiment. First, controller 11 determines whether image information P about the root canal of a tooth imaged by image diagnostic apparatus 300 has been accepted or not by accepting unit 30A (step S20). When controller 11 determines that image information P has not been accepted (step S20: NO), it returns the process back to step S20 and then continues the state of waiting for image information P.

When controller 11 determines that image information P has been accepted (step S20: YES), controller 11 compares the accepted image information P with the image information for each classification of the root canal shape stored in the memory, and specifies the classification of the root canal shape of image information P (step S21). Controller 11 reads information D related to root canal treatment from the memory based on the specified classification of the root canal shape (step S22).

Controller 11 outputs the information about the cutting tool type among information D related to root canal treatment read in step S22 to display unit 16 and causes display unit 16 to show a tool that can be selected (step S23). An operator attaches cutting tool 5 displayed on display unit 16 to head 2. Controller 11 drives cutting tool 5 selected in step S23 based on the drive sequence included in information D related to root canal treatment read in step S22 (step S24).

Then, controller 11 determines whether the treatment result has been input or not from operation unit 15 (step S25). When the treatment result has been input (step S25: YES), controller 11 updates information D related to root canal treatment in the memory through machine learning (step S26). When the treatment result has not been input (step S25: NO), controller 11 determines whether the operation to end the process in the root canal treatment apparatus has been accepted or not (step S27). When the operation to end the process in the root canal treatment apparatus has not been accepted (step S27: NO), controller 11 returns the process back to step S20 and then continues the state of waiting for acceptance of image information P. When the operation to end the process in the root canal treatment apparatus has been accepted (step S27: YES), controller 11 ends the process.

As described above, root canal treatment apparatus 100A according to the present third embodiment serves as a root canal treatment apparatus used for root canal treatment and includes: handpiece 1 having head 2 at which cutting tool 5 is held in a drivable manner; a drive unit configured to drive cutting tool 5 held at head 2; and controller 11 configured to control the drive unit. Furthermore, root canal treatment apparatus 100A according to the present third embodiment has a configuration of root canal treatment support apparatus 200 described in the first and second embodiments. Accordingly, root canal treatment apparatus 100A can by itself output information D related to root canal treatment that is suitable to each classification of the root canal shape and can appropriately support the operator's root canal treatment. Furthermore, according to this root canal treatment apparatus, cutting tool 5 can be driven in an appropriate drive sequence suitable to each classification of the root canal shape.

### (Fourth Embodiment)

The root canal treatment support system according to the present fourth embodiment will be described with regard to the configuration in which image comparing unit 252 selects information D related to root canal treatment from memory 253 without specifying the classification of the root canal shape based on the image information accepted by image accepting unit 251, as described in the first embodiment. In the following description, the root canal treatment support system according to the present fourth embodiment is identical in configuration to the root canal treatment support system according to the first embodiment, except for the configuration using the root canal treatment support apparatus selecting the information related to root canal treatment from a memory without specifying the classification of the root canal shape. Thus, the same reference characters will be used for description, but the detailed description thereof will not be repeated.

### [Configuration of Root Canal Treatment Support Apparatus]

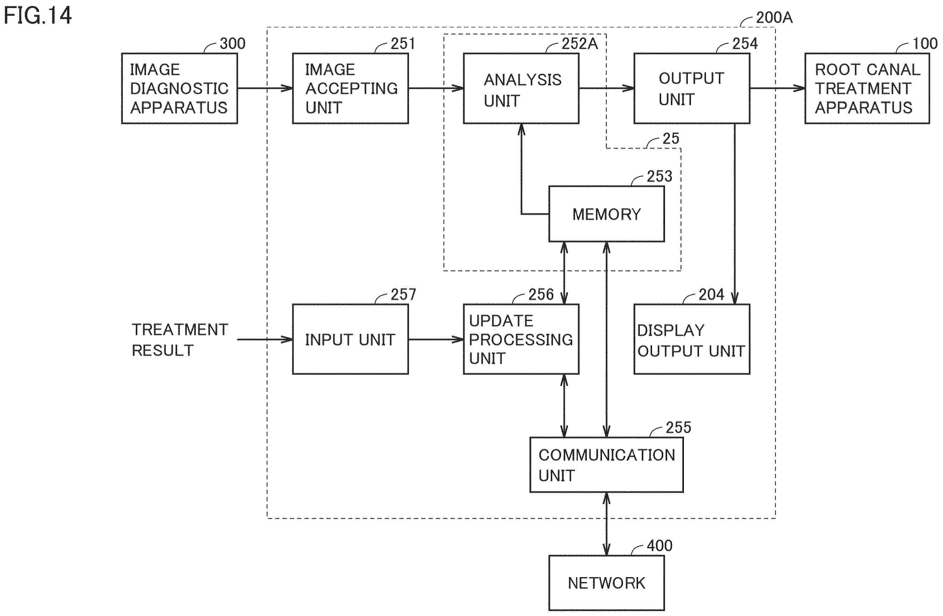

Fig. 14 is a block diagram for illustrating the configuration of a root canal treatment support apparatus 200A according to the present fourth embodiment. Root canal treatment support apparatus 200A includes an image accepting unit 251, an analysis unit 252A, a memory 253, an output unit 254, a display output unit 204, a communication unit 255, an update processing unit 256, and an input unit 257. Since the root canal treatment support apparatus according to the present fourth embodiment is identical in hardware configuration to the root canal treatment support apparatus according to the first embodiment, the same reference characters will be used for description, but the detailed description thereof will not be repeated. Furthermore, the same configuration of root canal treatment support apparatus 200A as that of root canal treatment support apparatus 200 according to the first embodiment will be described using the same reference characters, but the detailed description thereof will not be repeated.

Analysis unit 252A obtains characteristic value of the root canal as analysis information about the root canal shape from image information P accepted by image accepting unit 251. The analysis information about the root canal shape includes, for example, the length of the root canal, the cross-sectional shape of the root canal, the diameter of the root canal, the cross-sectional area of the root canal, the curvature (curvature rate) of the root canal, the change rate of the diameter of the root canal relative to the longitudinal direction of the root canal, the change rate of the cross-sectional area of the root canal, the change rate of the curvature of the root canal, and the like. For analysis unit 252A, every known method such as image analysis for the accepted image information P can be applied. By applying the known method, the analysis information about the root canal shape is obtained. When root canal treatment apparatus 100 includes a root canal length measurement unit for electrically measuring the length of the root canal and can accept the measurement results of the root canal length measurement unit, or when root canal treatment apparatus 100 can accept the measurement results from an apparatus including a root canal length measurement unit, the length of the root canal measured by the root canal length measurement unit may be included in one of the analysis information about the root canal shape obtained in analysis unit 252A. Thereby, analysis unit 252A can obtain the information about the root canal length with high accuracy.

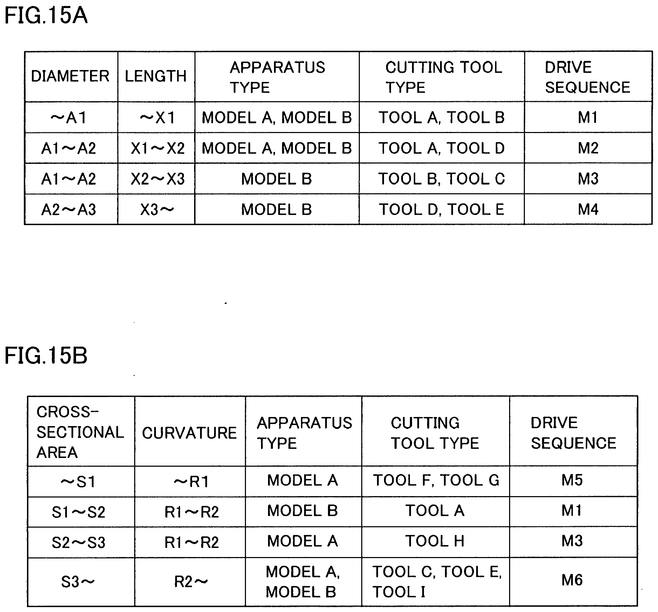

The setting information for each analysis information about the root canal shape is stored in memory 253. Figs. 15A and 15B each are a diagram for illustrating an example of the setting information for each analysis information about the root canal shape. Fig. 15A shows settings of an appropriate apparatus type, an appropriate cutting tool type, and an appropriate drive sequence for each root canal diameter and each root canal length. For example, when the diameter of the root canal is up to A1 and the length of the root canal is up to X1, the setting information shows: model A and model B as an apparatus type, tool A and tool B as a cutting tool type, and M1 as a drive sequence. Furthermore, when the diameter of the root canal is up to A1 to A2, and the length of the root canal is up to X2 to X3, the setting information shows: model B as an apparatus type; tool B and tool C as a cutting tool type; and M3 as a drive sequence. The apparatus type, the cutting tool type and the drive sequence are as shown in Figs. 6A, 6B and Fig. 7 as in the first embodiment.

Furthermore, Fig. 15B shows settings of an appropriate apparatus type, an appropriate cutting tool type and an appropriate drive sequence for each change rate of the cross-sectional area of the root canal relative to the longitudinal direction of the root canal and each change rate of the curvature of the root canal. For example, when the change rate of the cross-sectional area of the root canal is up to S1 and the change rate of the curvature of the root canal is up to R1, the setting information shows: model A as an apparatus type; tool F and tool G as a cutting tool type; and M5 as a drive sequence. Furthermore, when the change rate of the cross-sectional area of the root canal is up to S2 to S3 and the length of the root canal is up to R1 to R2, the setting information shows: model A as an apparatus type; tool H as a cutting tool type; and M3 as a drive sequence. In addition, Figs. 15A and 15B each show merely an example. The analysis information about the root canal shape may be defined by classifying the setting information with only one characteristic value of the root canal (for example, the curvature of the root canal) or by classifying the setting information with three or more characteristic values of the root canal.

Based on the obtained analysis information, analysis unit 252A selects an appropriate apparatus type, an appropriate cutting tool type and an appropriate drive sequence from the setting information shown in Fig. 15A or 15B to select information D related to root canal treatment, and then, transfers the selected information to output unit 254. In other words, in analysis unit 252A, information D related to root canal treatment can be selected without comparison with the classification of the root canal shape stored in advance in memory 253. In addition, analysis unit 252A and memory 253 form information generation unit 25 for generating information related to root canal treatment suitable to the root canal shape based on image information P accepted by image accepting unit 251.

### [Process in Root Canal Treatment Support Apparatus]

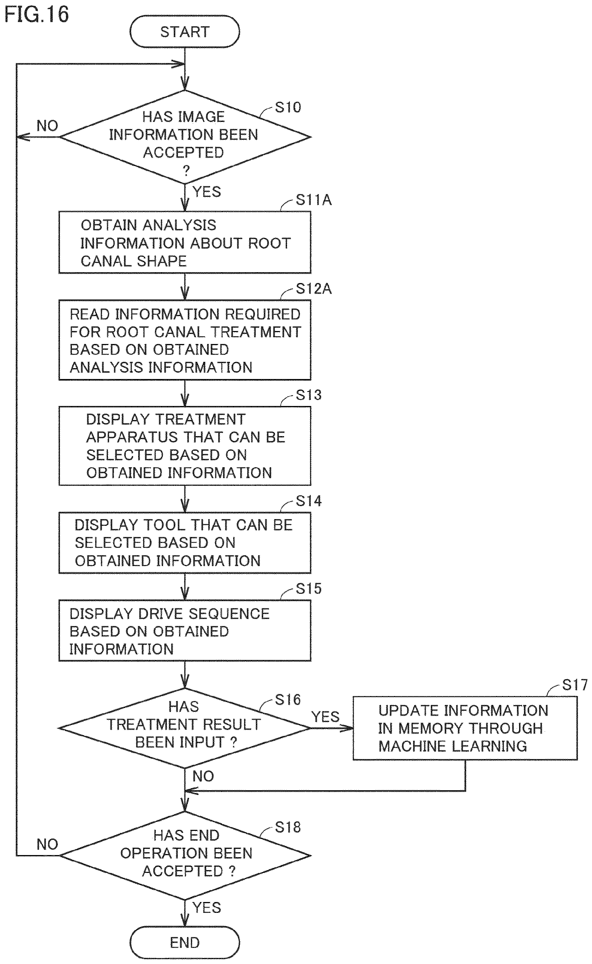

Then, the process in root canal treatment support apparatus 200A will be hereinafter described with reference to a flowchart. Fig. 16 is a flowchart for illustrating a process in root canal treatment support apparatus 200A according to the present fourth embodiment. In addition, the same steps in the flowchart for root canal treatment support apparatus 200A as those in the flowchart (Fig. 8) for root canal treatment support apparatus 200 according to the first embodiment will be described using the same reference characters, and the detailed description thereof will be not repeated. First, CPU 201 (particularly, image accepting unit 251) determines whether image information P about the root canal of the tooth imaged by image diagnostic apparatus 300 has been accepted or not (step S10). When CPU 201 determines that image information P has not been accepted (step S10: NO), CPU 201 returns the process back to step S10 and then continues the state of waiting for acceptance of image information P.

When CPU 201 determines that image information P has been accepted (step S10: YES), CPU 201 (particularly, analysis unit 252A) calculates the length of the root canal, the diameter of the root canal, the change rate of the diameter of the root canal relative to the longitudinal direction of the root canal, the change rate of the curvature of the root canal, and the like based on accepted image information P, so as to be obtained as analysis information about the root canal shape (step S11A). CPU 201 (particularly, image comparing unit 252) selects information D related to root canal treatment based on the analysis information about the obtained root canal shape, and reads the selected information D from memory 253 (step S12A).

CPU 201 (particularly, output unit 254) outputs the information about the apparatus type among information D related to root canal treatment read in step S12A to display device 204a and causes display device 204a to show the root canal treatment apparatus that can be selected (step S13). Since the subsequent steps in the flowchart are the same as those in the flowchart (Fig. 8) for root canal treatment support apparatus 200 according to the first embodiment, the description thereof will not be repeated.

As described above, the root canal treatment support system according to the present fourth embodiment includes root canal treatment support apparatus 200A for providing information that can be used for root canal treatment, and root canal treatment apparatus 100 employing the information from root canal treatment support apparatus 200A. Root canal treatment support apparatus 200A includes: image accepting unit 251 configured to accept image information obtained by imaging a root canal of a tooth; information generation unit 25 configured to generate information related to root canal treatment suitable to the root canal shape based on image information P accepted by image accepting unit 251; and output unit 254 configured to output the information generated by information generation unit 25. Specifically, information generation unit 25 includes: analysis unit 252A configured to obtain analysis information about the root canal shape based on image information P accepted by image accepting unit 251; memory 253 in which information D related to root canal treatment is stored for each analysis information about the root canal shape; and selection unit (analysis unit 252A) configured to select the information related to root canal treatment from memory 253 based on the analysis information obtained in analysis unit 252A. Root canal treatment apparatus 100 includes handpiece 1 having head 2 at which cutting tool 5 is held in a drivable manner, a drive unit (motor driver 13 and the like) configured to drive cutting tool 5 held at head 2, and controller 11 configured to control the drive unit. Based on the information output from output unit 254, controller 11 controls the drive unit to drive cutting tool 5.

Accordingly, the root canal treatment support system according to the present fourth embodiment can output information D related to root canal treatment in accordance with the analysis information about the root canal shape without specifying the classification of the root canal shape, and also can appropriately support the operator's root canal treatment. The root canal may extremely rarely have a particular shape. For example, there may be a root canal having a cross section formed in a C-shaped trough, a root canal having a curvature close to 180 degrees with respect to the tooth axis near its root apex, and the like. Even in the above-described cases, by analyzing the root canal shape based on the image information (particularly three-dimensional X-ray CT image information) of a tooth, the information about the cutting tool type or the drive sequence can be supported, thereby avoiding a fracture of a tooth, bite of cutting tool 5 into a root, and a fracture of cutting tool 5. In this way, according to the root canal treatment support system, cutting tool 5 can be driven in the appropriate drive sequence that is suitable to each analysis information about the root canal shape.

The analysis information about the root canal shape obtained in analysis unit 252A may include at least one piece of information of: the change rate of the cross-sectional area of the root canal relative to the longitudinal direction of the root canal and the change rate of the curvature of the root canal relative to the longitudinal direction of the root canal. Thereby, the operator's root canal treatment can be more appropriately supported.

As described in the third embodiment, the configuration of root canal treatment support apparatus 200A may be included in another root canal treatment apparatus 100A. Since the configuration and the block diagram of root canal treatment apparatus 100A including the configuration of root canal treatment support apparatus 200A are the same as those shown in Figs. 11 and 12, the description thereof will not be repeated.

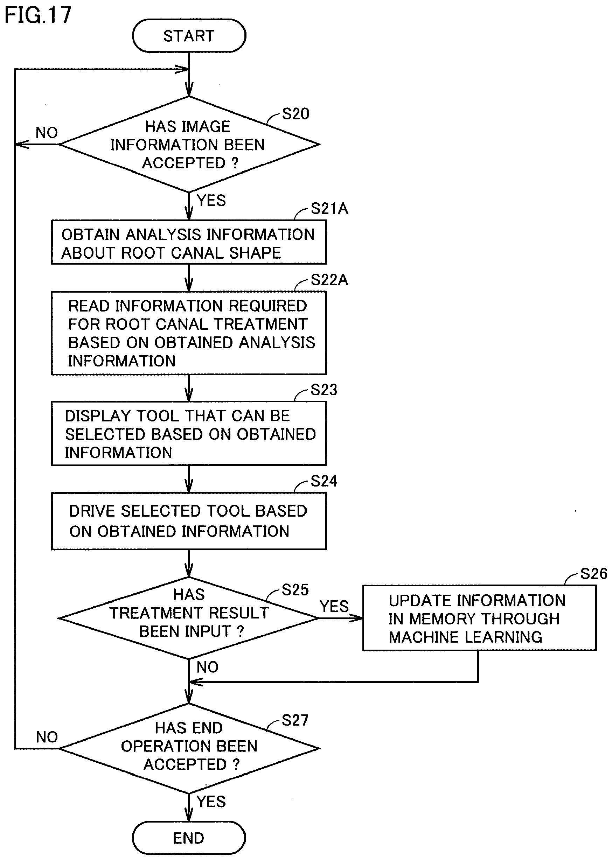

Then, the process in root canal treatment apparatus 100A including the configuration of root canal treatment support apparatus 200A will be hereinafter described with reference to a flowchart. Fig. 17 is a flowchart for illustrating a process in another root canal treatment apparatus 100A according to the present fourth embodiment. The same steps in the flowchart for root canal treatment apparatus 100A including the configuration of root canal treatment support apparatus 200A as those in the flowchart (Fig. 13) for root canal treatment apparatus 100A according to the third embodiment will be described using the same reference characters, and the detailed description thereof will be not repeated. First, controller 11 determines whether image information P about the root canal of the tooth imaged by image diagnostic apparatus 300 has been accepted or not by accepting unit 30A (step S20). When controller 11 determines that image information P has not been accepted (step S20: NO), controller 11 returns the process back to step S20 and then continues the state of waiting for acceptance of image information P.

When controller 11 determines that image information P has been accepted (step S20: YES), controller 11 calculates the length of the root canal, the diameter of the root canal, the change rate of the diameter of the root canal relative to the longitudinal direction of the root canal, the change rate of the curvature of the root canal, and the like from the accepted image information P, so as to be obtained as analysis information about the root canal shape (step S21A). Controller 11 selects information D related to root canal treatment based on the obtained analysis information about the root canal shape and reads the selected information D from memory 253 (step S22A).

Controller 11 outputs the information about the cutting tool type among information D related to root canal treatment read in step S22 to display unit 16, to cause display unit 16 to show the tool that can be selected (step S23). Since the subsequent steps in the flowchart are the same as those in the flowchart (Fig. 13) for root canal treatment support apparatus 200 according to the first embodiment, the description thereof will not be repeated.

### (Other Modifications)

According to the description in the first to third embodiments, an apparatus type, a cutting tool type and a drive sequence are included as information D related to root canal treatment. However, information D related to root canal treatment may include information such as the procedure of the root canal treatment, the method of operating a root canal treatment support apparatus, advice from other operators, and the like. For example, when the root canal shape specified based on the image information is classified as the root canal being fractured, information D related to root canal treatment may include the procedure in which the treatment for enlarging the root canal is performed after the fractured part is first bonded with an adhesive. Furthermore, when the root canal shape specified based on the image information is classified as a radicular cyst formed due to accumulation of pus in a root apex, and the like, information D related to root canal treatment may include advice that a special operation such as apicoectomy needs to be performed for cutting and removing a root apex portion to remove a cyst.

The process in root canal treatment support apparatus 200 providing the information that can be used for root canal treatment is controlled by the program executed by CPU 201. The program includes: accepting image information P obtained by imaging a root canal of a tooth; generating information related to root canal treatment suitable to the root canal shape based on accepted image information P; and outputting the generated information. Particularly, generating information related to root canal treatment suitable to the root canal shape may consist of: specifying a classification of the root canal shape based on accepted image information P; and selecting information D related to root canal treatment from memory 253 storing information D related to root canal treatment based on the specified classification for each classification of the root canal shape. Furthermore, generating information related to root canal treatment suitable to the root canal shape may consist of: obtaining analysis information about the root canal shape based on accepted image information P; and outputting information D related to root canal treatment based on the obtained analysis information from memory 253 storing information D related to root canal treatment for each analysis information about the root canal shape.

Each of various processes as described above is defined as being implemented by one CPU 201, but the present invention is not limited thereto. Each of these various functions may be implemented by at least one semiconductor integrated circuit such as a processor, at least one application specific integrated circuit (ASIC), at least one digital signal processor (DSP), at least one field programmable gate array (FPGA) and/or other circuits having a computing function.

These circuits can perform the above-described various processes by reading one or more instructions from at least one tangible readable medium.

Such a medium is provided as an optional type of memory such as a magnetic medium (for example, a hard disk), an optical medium (for example, a compact disk (CD), DVD), volatile memory, and nonvolatile memory, but the present invention is not limited thereto.

The volatile memory may include a dynamic random access memory (DRAM) and a static random access memory (SRAM). The nonvolatile memory may include a ROM and an NVRAM.

Although the present invention has been described and illustrated in detail, it is clearly understood that the same is by way of illustration and example only and is not to be taken by way of limitation, the scope of the present invention being interpreted by the terms of the appended claims.

## Claims

1. A root canal treatment support apparatus (200) for providing information that can be used for root canal treatment, the root canal treatment support apparatus (200) comprising:
an accepting unit (251) configured to accept image information obtained by imaging a root canal of a tooth;
an information generation unit (25) configured to generate information related to root canal treatment suitable to a root canal shape based on the image information accepted by the accepting unit (251); and
an output unit (254) configured to output the information generated by the information generation unit (25), wherein
the information generation unit (25) includes
a classification specification unit configured to specify a classification of the root canal shape based on the image information accepted by the accepting unit (251),
a memory (253) in which the information related to root canal treatment is stored for each classification of the root canal shape, and
a selection unit configured to select the information related to root canal treatment from the memory (253) based on the classification specified by the classification specification unit.

2. The root canal treatment support apparatus according to claim 1, wherein
the information generation unit (25) includes
an analysis unit (252A) configured to obtain analysis information about the root canal shape based on the image information accepted by the accepting unit (251),
a memory (253) in which the information related to root canal treatment is stored for each analysis information about the root canal shape, and
a selection unit configured to select the information related to root canal treatment from the memory (253) based on the analysis information obtained in the analysis unit (252A).

3. The root canal treatment support apparatus according to claim 2, wherein the information generation unit (25) is configured to accept a measurement result from a root canal length measurement unit configured to electrically measure a length of a root canal, and to include the measurement result as one piece of analysis information about the root canal shape obtained in the analysis unit (252A).

4. The root canal treatment support apparatus according to claim 2 or 3, wherein the analysis information about the root canal shape obtained in the analysis unit (252A) includes at least one piece of information of:
a change rate of a cross-sectional area of the root canal relative to a longitudinal direction of the root canal; and
a change rate of a curvature of the root canal relative to the longitudinal direction of the root canal.

5. The root canal treatment support apparatus according to claim 1, wherein the classification specification unit is configured to compare the image information accepted by the accepting unit (251) with image information for each type of the root canal shape stored in the memory (253), to specify a classification of the root canal shape.

6. The root canal treatment support apparatus according to claim 1, wherein the classification specification unit is configured to compare a specific parameter of the root canal shape specified from the image information accepted by the accepting unit (251) with a parameter of the root canal shape in each classification stored in the memory (253), to specify a classification of the root canal shape.

7. The root canal treatment support apparatus according to any one of claims 1, 5 and 6, wherein
the output unit (254) is configured to output, as the information related to root canal treatment, at least one piece of information of:
type information about a root canal treatment apparatus (100) suitable to treatment for the root canal shape in the classification specified by the classification specification unit; and
type information about a cutting tool (5) used in the root canal treatment apparatus (100).

8. The root canal treatment support apparatus according to any one of claims 1 and 5 to 7, wherein the output unit (254) is configured to output, as the information related to root canal treatment, control information about a root canal treatment apparatus (100) suitable to treatment for the root canal shape in the classification specified by the classification specification unit.

9. The root canal treatment support apparatus according to claim 8, wherein the control information includes at least one piece of information of: an instruction for a forward rotation; an instruction for a reverse rotation; a stop instruction; a number of rotations; a stop condition; an instruction for a switching interval between a forward rotation and a reverse rotation; and a condition for a reverse rotation, each of which is for a cutting tool (5).

10. The root canal treatment support apparatus according to any one of claims 1 and 5 to 9, wherein
the root canal treatment support apparatus (200) further comprises a display unit or a sound output unit, and
the output unit (254) is configured to output the information related to root canal treatment to the display unit or the sound output unit.

11. The root canal treatment support apparatus according to claim 8 or 9, wherein the output unit (254) is capable of outputting the control information to the root canal treatment apparatus (100).

12. The root canal treatment support apparatus according to any one of claims 1 and 5 to 11, wherein the image information obtained by imaging a root canal of a tooth is a three-dimensional image and is at least one of an X-ray CT image, an ultrasonic image and an OCT image.

13. The root canal treatment support apparatus according to any one of claims 1 and 5 to 12, wherein
the root canal treatment support apparatus (200) further comprises a communication unit (255) for establishing a connection to a network, and
the memory (253) is configured to update the information related to root canal treatment based on information from an external database connected to the memory through the communication unit (255).

14. The root canal treatment support apparatus according to any one of claims 1 and 5 to 13, wherein
the root canal treatment support apparatus (200) further comprises:
an input unit (257) configured to receive information about a treatment result obtained by performing root canal treatment based on the information output from the output unit (254); and
an update processing unit (256) configured to update, through machine learning, the information related to root canal treatment stored in the memory (253) by using the information about the treatment result input into the input unit (257).

15. A program for controlling a root canal treatment support apparatus (200) for providing information that can be used for root canal treatment, the program comprising:
accepting image information obtained by imaging a root canal of a tooth;
generating information related to root canal treatment suitable to a root canal shape based on the image information accepted;
outputting the information generated;
specifying a classification of the root canal shape based on the image information accepted; and
selecting information related to root canal treatment stored for each classification of the root canal shape from a memory (253) based on the classification specified.

16. A root canal treatment apparatus (100) used for root canal treatment, the root canal treatment apparatus (100) comprising:
a handpiece (1) having a head (2) at which a cutting tool (5) is held in a drivable manner;
a drive unit (13) configured to drive the cutting tool (5) held at the head (2);
a controller (11) configured to control the drive unit (13); and
the root canal treatment support apparatus (200) according to any one of claims 1 to 14.

17. A root canal treatment support system comprising:
a root canal treatment apparatus (100) according to claim 16, wherein
the controller (11) is configured to control the drive unit (13) to drive the cutting tool (5) based on the information output from the output unit (254).

18. The root canal treatment support system according to claim 17, wherein
the root canal treatment apparatus (100) further includes a load detector configured to detect a load applied to the cutting tool (5), and
the controller (100) is configured to change control of the drive unit (13) in accordance with the load applied to the cutting tool (5) and detected by the load detector.

19. The root canal treatment support system according to claim 18, wherein the controller (11) is configured to perform control for driving in a reverse rotation, a switching interval between a forward rotation and a reverse rotation, or driving to a stop operation when the load applied to the cutting tool (5) and detected by the load detector is equal to or greater than a reference load.

20. The root canal treatment support system according to any one of claims 17 to 19, further comprising a position detector (12) configured to detect a position of a tip end of the cutting tool (5) inside the root canal, the position being obtained by an electrical root canal length measurement, wherein
the controller (11) is configured to change control of the drive unit (13) in accordance with the position detected by the position detector (12).

21. The root canal treatment support system according to claim 20, wherein the controller (11) is configured to perform control for driving in a reverse rotation, a switching interval between a forward rotation and a reverse rotation, or driving to a stop operation when the position detected by the position detector (12) reaches a reference position.

22. The root canal treatment support system according to any one of claims 17 to 21, further comprising at least one image diagnostic apparatus (300) of: an X-ray CT image diagnostic apparatus; an ultrasonic image diagnostic apparatus; and an OCT image diagnostic apparatus.

## Patentansprüche

1. Vorrichtung (200) zur Unterstützung einer Wurzelkanalbehandlung, um eine Information bereitzustellen, die für eine Wurzelkanalbehandlung verwendet werden kann, wobei die Vorrichtung (200) zur Unterstützung einer Wurzelkanalbehandlung aufweist:
eine Übernahmeeinheit (251), die dafür konfiguriert ist, eine Bildinformation zu übernehmen, die erhalten wird, indem ein Wurzelkanal eines Zahns abgebildet wird;
eine Informationserzeugungseinheit (25), die dafür konfiguriert ist, eine Information in Bezug auf eine Wurzelkanalbehandlung, die einer Wurzelkanalform entspricht, basierend auf der durch die Übernahmeeinheit (251) übernommenen Bildinformation zu erzeugen; und
eine Ausgabeeinheit (254), die dafür konfiguriert ist, die durch die Informationserzeugungseinheit (25) erzeugte Information auszugeben, wobei
die Informationserzeugungseinheit (25) umfasst
eine Einheit zur Spezifizierung einer Klassifizierung, die dafür konfiguriert ist, eine Klassifizierung der Wurzelkanalform basierend auf der durch die Übernahmeeinheit (251) übernommenen Bildinformation zu spezifizieren,
einen Speicher (253), in dem die Information in Bezug auf eine Wurzelkanalbehandlung für jede Klassifizierung der Wurzelkanalform gespeichert wird, und
eine Auswahleinheit, die dafür konfiguriert ist, die Information in Bezug auf eine Wurzelkanalbehandlung aus dem Speicher (253) basierend auf der durch die Einheit zur Spezifizierung einer Klassifizierung spezifizierten Klassifizierung auszuwählen.

2. Vorrichtung zur Unterstützung einer Wurzelkanalbehandlung nach Anspruch 1, wobei
die Informationserzeugungseinheit (25) umfasst
eine Analyseeinheit (252A), die dafür konfiguriert ist, eine Analyseinformation über die Wurzelkanalform basierend auf der durch die Übernahmeeinheit (251) übernommenen Bildinformation zu erhalten,
einen Speicher (253), in dem die Information in Bezug auf eine Wurzelkanalbehandlung für jede Analyseinformation über die Wurzelkanalform gespeichert wird, und
eine Auswahleinheit, die dafür konfiguriert ist, die Information in Bezug auf eine Wurzelkanalbehandlung aus dem Speicher (253) basierend auf der in der Analyseeinheit (252A) erhaltene Analyseinformation auszuwählen.

3. Vorrichtung zur Unterstützung einer Wurzelkanalbehandlung nach Anspruch 2, wobei die Informationserzeugungseinheit (25) dafür konfiguriert ist, ein Messergebnis von einer Einheit zur Messung einer Wurzelkanallänge zu übernehmen, die dafür konfiguriert ist, eine Länge eines Wurzelkanals elektrisch zu messen, und das Messergebnis als einen Teil einer Analyseinformation über die Wurzelkanalform, die in der Analyseeinheit (252A) erhalten wird, einzubeziehen.

4. Vorrichtung zur Unterstützung einer Wurzelkanalbehandlung nach Anspruch 2 oder 3, wobei die Analyseinformation über die Wurzelkanalform, die in der Analyseeinheit (252A) erhalten wird, zumindest eine Teilinformation:
einer Änderungsrate einer Querschnittsfläche des Wurzelkanals relativ zu einer longitudinalen Richtung des Wurzelkanals; und
einer Änderungsrate einer Krümmung des Wurzelkanals relativ zur longitudinalen Richtung des Wurzelkanals
enthält.

5. Vorrichtung zur Unterstützung einer Wurzelkanalbehandlung nach Anspruch 1, wobei die Einheit zur Spezifizierung einer Klassifizierung dafür konfiguriert ist, die durch die Übernahmeeinheit (251) übernommene Bildinformation mit einer Bildinformation für jeden Typ der Wurzelkanalform, die im Speicher (253) gespeichert ist, zu vergleichen, um eine Klassifizierung der Wurzelkanalform zu spezifizieren.

6. Vorrichtung zur Unterstützung einer Wurzelkanalbehandlung nach Anspruch 1, wobei die Einheit zur Spezifizierung einer Klassifizierung dafür konfiguriert ist, einen spezifischen Parameter der Wurzelkanalform, die aus der durch die Übernahmeeinheit (251) übernommenen Bildinformation spezifiziert wird, mit einem Parameter der Wurzelkanalform in jeder Klassifizierung zu vergleichen, die im Speicher (253) gespeichert ist, um eine Klassifizierung der Wurzelkanalform zu spezifizieren.

7. Vorrichtung zur Unterstützung einer Wurzelkanalbehandlung nach einem der Ansprüche 1, 5 und 6, wobei
die Ausgabeeinheit (254) dafür konfiguriert ist, als die Information in Bezug auf eine Wurzelkanalbehandlung zumindest eine Teilinformation:
einer Typinformation über eine Vorrichtung (100) für eine Wurzelkanalbehandlung, die für eine Behandlung für die Wurzelkanalform in der Klassifizierung, die durch die Einheit zur Spezifizierung einer Klassifizierung spezifiziert wird, geeignet ist; und
einer Typinformation über ein Fräsinstrument (5), das in der Vorrichtung (100) für eine Wurzelkanalbehandlung verwendet wird,
auszugeben.

8. Vorrichtung zur Unterstützung einer Wurzelkanalbehandlung nach einem der Ansprüche 1 und 5 bis 7, wobei die Ausgabeeinheit (254) dafür konfiguriert ist, als die Information in Bezug auf eine Wurzelkanalbehandlung eine Steuerungsinformation über eine Vorrichtung (100) für eine Wurzelkanalbehandlung auszugeben, die für eine Behandlung für die Wurzelkanalform in der Klassifizierung geeignet ist, die durch die Einheit zur Spezifizierung einer Klassifizierung spezifiziert wird.

9. Vorrichtung zur Unterstützung einer Wurzelkanalbehandlung nach Anspruch 8, wobei die Steuerungsinformation zumindest eine Teilinformation: einer Anweisung für eine Vorwärtsrotation; einer Anweisung für eine Rückwärtsrotation; einer Stopp-Anweisung; einer Anzahl von Rotationen bzw. Umdrehungen; einer Stopp-Bedingung; einer Anweisung für ein Umschaltintervall zwischen einer Vorwärtsrotation und einer Rückwärtsrotation; und einer Bedingung für eine Rückwärtsrotation enthält, von denen jede für ein Fräsinstrument (5) gedacht ist.

10. Vorrichtung zur Unterstützung einer Wurzelkanalbehandlung nach einem der Ansprüche 1 und 5 bis 9, wobei
die Vorrichtung (200) zur Unterstützung einer Wurzelkanalbehandlung ferner eine Anzeigeeinheit oder eine Tonausgabeeinheit aufweist und
die Ausgabeeinheit (254) dafür konfiguriert ist, die Information in Bezug auf eine Wurzelkanalbehandlung an die Anzeigeeinheit oder die Tonausgabeeinheit auszugeben.

11. Vorrichtung zur Unterstützung einer Wurzelkanalbehandlung nach Anspruch 8 oder 9, wobei die Ausgabeeinheit (254) die Steuerungsinformation an die Vorrichtung (100) für eine Wurzelkanalbehandlung ausgeben kann.

12. Vorrichtung zur Unterstützung einer Wurzelkanalbehandlung nach einem der Ansprüche 1 und 5 bis 11, wobei die Bildinformation, die durch Abbilden eines Wurzelkanals eines Zahns erhalten wird, ein dreidimensionales Bild ist und zumindest eines eines Röntgen-CT-Bildes, eines Ultraschallbildes und eines OCT-Bildes ist.

13. Vorrichtung zur Unterstützung einer Wurzelkanalbehandlung nach einem der Ansprüche 1 und 5 bis 12, wobei
die Vorrichtung (200) zur Unterstützung einer Wurzelkanalbehandlung ferner eine Kommunikationseinheit (255) aufweist, um eine Verbindung mit einem Netzwerk einzurichten, und
der Speicher (253) dafür konfiguriert ist, die Information in Bezug auf eine Wurzelkanalbehandlung basierend auf einer Information von einer externen Datenbank, die über die Kommunikationseinheit (255) mit dem Speicher verbunden ist, zu aktualisieren.

14. Vorrichtung zur Unterstützung einer Wurzelkanalbehandlung nach einem der Ansprüche 1 und 5 bis 13, wobei
die Vorrichtung (200) zur Unterstützung einer Wurzelkanalbehandlung ferner aufweist:
eine Eingabeeinheit (257), die dafür konfiguriert ist, eine Information über ein Behandlungsergebnis zu empfangen, das erhalten wird, indem eine Wurzelkanalbehandlung basierend auf der von der Ausgabeeinheit (254) ausgegebenen Information durchgeführt wird; und
eine Verarbeitungseinheit (256) zur Aktualisierung, die dafür konfiguriert ist, durch maschinelles Lernen die Information in Bezug auf eine Wurzelkanalbehandlung, die im Speicher (253) gespeichert ist, zu aktualisieren, indem die in die Eingabeeinheit (257) eingegebene Information über das Behandlungsergebnis verwendet wird.

15. Programm zum Steuern einer Vorrichtung (200) zur Unterstützung einer Wurzelkanalbehandlung, um eine Information bereitzustellen, die für eine Wurzelkanalbehandlung verwendet werden kann, wobei das Programm aufweist:
ein Übernehmen einer Bildinformation, die erhalten wird, indem ein Wurzelkanal eines Zahns abgebildet wird;
ein Erzeugen einer Information in Bezug auf eine Wurzelkanalbehandlung, die einer Wurzelkanalform entspricht, basierend auf der übernommenen Bildinformation;
ein Ausgeben der erzeugten Information;
ein Spezifizieren einer Klassifizierung der Wurzelkanalform basierend auf der übernommenen Bildinformation; und
ein Auswählen einer Information in Bezug auf eine Wurzelkanalbehandlung, die für jede Klassifizierung der Wurzelkanalform gespeichert ist, aus einem Speicher (253) basierend auf der spezifizierten Klassifizierung.

16. Vorrichtung (100) für eine Wurzelkanalbehandlung, die für eine Wurzelkanalbehandlung verwendet wird, wobei die Vorrichtung (100) für eine Wurzelkanalbehandlung aufweist:
ein Handstück (1) mit einem Kopf (2), an dem ein Fräsinstrument (5) antreibbar gehalten wird;
eine Antriebseinheit (13), die dafür konfiguriert ist, das am Kopf (2) gehaltene Fräsinstrument (5) anzutreiben;
einen Controller (11), der dafür konfiguriert ist, die Antriebseinheit (13) zu steuern; und
die Vorrichtung (200) zur Unterstützung einer Wurzelkanalbehandlung nach einem der Ansprüche 1 bis 14.

17. System zur Unterstützung einer Wurzelkanalbehandlung, aufweisend:
eine Vorrichtung (100) für eine Wurzelkanalbehandlung nach Anspruch 16, wobei
der Controller (11) dafür konfiguriert ist, die Antriebseinheit (13) zu steuern, um das Fräsinstrument (5) basierend auf der von der Ausgabeeinheit (254) anzutreiben.

18. System zur Unterstützung einer Wurzelkanalbehandlung nach Anspruch 17, wobei
die Vorrichtung (100) für eine Wurzelkanalbehandlung ferner einen Lastdetektor enthält, der dafür konfiguriert ist, eine auf das Fräsinstrument (5) angewandte Last zu detektieren, und
der Controller (11) dafür konfiguriert ist, eine Steuerung der Antriebseinheit (13) gemäß der auf das Fräsinstrument (5) angewandten und durch den Lastdetektor detektierten Last zu ändern.

19. System zur Unterstützung einer Wurzelkanalbehandlung nach Anspruch 18, wobei der Controller (11) dafür konfiguriert ist, eine Steuerung für einen Antrieb in einer Rückwärtsrichtung, ein Umschaltintervall zwischen einer Vorwärtsrotation und einer Rückwärtsrotation oder eine Ansteuerung für eine Stopp-Operation durchzuführen, wenn die auf das Fräsinstrument (5) angewandte und durch den Lastdetektor detektierte Last gleich einer Referenzlast oder größer ist.

20. System zur Unterstützung einer Wurzelkanalbehandlung nach einem der Ansprüche 17 bis 19, ferner aufweisend einen Positionsdetektor (12), der dafür konfiguriert ist, eine Position eines Spitzenendes des Fräsinstruments (5) innerhalb des Wurzelkanals zu detektieren, wobei die Position mittels einer elektrischen Messung der Wurzelkanallänge erhalten wird, wobei
der Controller (11) dafür konfiguriert ist, eine Steuerung der Antriebseinheit (13) gemäß der durch den Positionsdetektor (12) detektierten Position zu ändern.

21. System zur Unterstützung einer Wurzelkanalbehandlung nach Anspruch 20, wobei der Controller (11) dafür konfiguriert ist, eine Steuerung für einen Antrieb in einer Rückwärtsrichtung, ein Umschaltintervall zwischen einer Vorwärtsrotation und einer Rückwärtsrotation oder eine Ansteuerung für eine Stopp-Operation durchzuführen, wenn die durch den Positionsdetektor (12) detektierte Position eine Referenzposition erreicht.

22. System zur Unterstützung einer Wurzelkanalbehandlung nach einem der Ansprüche 17 bis 21, ferner aufweisend zumindest eine Bilddiagnosevorrichtung (300) einer Röntgen-CT-Bilddiagnosevorrichtung; einer Ultraschall-Bilddiagnosevorrichtung und einer OCT-Bilddiagnosevorrichtung.

## Revendications

1. Appareil de support de traitement de canal radiculaire (200) pour fournir des informations qui peuvent être utilisées pour un traitement de canal radiculaire, l'appareil de support de traitement de canal radiculaire (200) comprenant :
une unité d'acceptation (251) configurée pour accepter des informations d'image obtenues par imagerie d'un canal radiculaire d'une dent ;
une unité de génération d'informations (25) configurée pour générer des informations relatives à un traitement de canal radiculaire approprié pour une forme de canal radiculaire sur la base des informations d'image acceptées par l'unité d'acceptation (251) ; et
une unité de sortie (254) configurée pour délivrer en sortie les informations générées par l'unité de génération d'informations (25), dans lequel
l'unité de génération d'informations (25) comprend
une unité de spécification de classification configurée pour spécifier une classification de la forme du canal radiculaire sur la base des informations d'image acceptées par l'unité d'acceptation (251),
une mémoire (253) dans laquelle les informations relatives au traitement de canal radiculaire sont stockées pour chaque classification de la forme du canal radiculaire, et
une unité de sélection configurée pour sélectionner les informations relatives au traitement de canal radiculaire à partir de la mémoire (253) sur la base de la classification spécifiée par l'unité de spécification de classification.

2. Appareil de support de traitement de canal radiculaire selon la revendication 1, dans lequel
l'unité de génération d'informations (25) comprend
une unité d'analyse (252A) configurée pour obtenir des informations d'analyse sur la forme du canal radiculaire sur la base des informations d'image acceptées par l'unité d'acceptation (251),
une mémoire (253) dans laquelle les informations relatives au traitement de canal radiculaire sont stockées pour chaque information d'analyse sur la forme du canal radiculaire, et
une unité de sélection configurée pour sélectionner les informations relatives au traitement de canal radiculaire à partir de la mémoire (253) sur la base des informations d'analyse obtenues dans l'unité d'analyse (252A).

3. Appareil de support de traitement de canal radiculaire selon la revendication 2, dans lequel l'unité de génération d'informations (25) est configurée pour accepter un résultat de mesure provenant d'une unité de mesure de longueur de canal radiculaire configurée pour mesurer électriquement une longueur d'un canal radiculaire, et pour comprendre le résultat de mesure en tant qu'élément d'informations d'analyse sur la forme du canal radiculaire obtenues dans l'unité d'analyse (252A).

4. Appareil de support de traitement de canal radiculaire selon la revendication 2 ou 3, dans lequel les informations d'analyse sur la forme du canal radiculaire obtenues dans l'unité d'analyse (252A) comprennent au moins un élément d'informations de :
un taux de changement d'une aire en section transversale du canal radiculaire par rapport à une direction longitudinale du canal radiculaire ; et
un taux de changement d'une courbure du canal radiculaire par rapport à la direction longitudinale du canal radiculaire.

5. Appareil de support de traitement de canal radiculaire selon la revendication 1, dans lequel l'unité de spécification de classification est configurée pour comparer les informations d'image acceptées par l'unité d'acceptation (251) avec des informations d'image pour chaque type de la forme du canal radiculaire stockée dans la mémoire (253), pour spécifier une classification de la forme du canal radiculaire.

6. Appareil de support de traitement de canal radiculaire selon la revendication 1, dans lequel l'unité de spécification de classification est configurée pour comparer un paramètre spécifique de la forme du canal radiculaire spécifiée à partir des informations d'image acceptées par l'unité d'acceptation (251) avec un paramètre de la forme du canal radiculaire dans chaque classification stockée dans la mémoire (253), pour spécifier une classification de la forme du canal radiculaire.

7. Appareil de support de traitement de canal radiculaire selon l'une des revendications 1, 5 et 6, dans lequel
l'unité de sortie (254) est configurée pour délivrer en sortie, en tant qu'informations relatives au traitement de canal radiculaire, au moins un élément d'informations de :
informations de type sur un appareil de traitement de canal radiculaire (100) approprié pour un traitement pour la forme du canal radiculaire dans la classification spécifiée par l'unité de spécification de classification ; et
informations de type sur un outil de coupe (5) utilisé dans l'appareil de traitement de canal radiculaire (100).

8. Appareil de support de traitement de canal radiculaire selon l'une des revendications 1 et 5 à 7, dans lequel l'unité de sortie (254) est configurée pour délivrer en sortie, en tant qu'informations relatives au traitement de canal radiculaire, des informations de commande sur un appareil de traitement de canal radiculaire (100) approprié pour un traitement pour la forme du canal radiculaire dans la classification spécifiée par l'unité de spécification de classification.

9. Appareil de support de traitement de canal radiculaire selon la revendication 8, dans lequel les informations de commande comprennent au moins un élément d'informations de : une instruction pour une rotation vers l'avant ; une instruction pour une rotation inverse ; une instruction d'arrêt ; un nombre de rotations ; une condition d'arrêt ; une instruction pour un intervalle de commutation entre une rotation vers l'avant et une rotation inverse ; et une condition pour une rotation inverse, dont chacun est pour un outil de coupe (5).

10. Appareil de support de traitement de canal radiculaire selon l'une des revendications 1 et 5 à 9, dans lequel
l'appareil de support de traitement de canal radiculaire (200) comprend en outre une unité d'affichage ou une unité de sortie sonore, et
l'unité de sortie (254) est configurée pour délivrer en sortie les informations relatives au traitement de canal radiculaire à l'unité d'affichage ou l'unité de sortie sonore.

11. Appareil de support de traitement de canal radiculaire selon la revendication 8 ou 9, dans lequel l'unité de sortie (254) est apte à délivrer en sortie les informations de commande à l'appareil de traitement de canal radiculaire (100).

12. Appareil de support de traitement de canal radiculaire selon l'une des revendications 1 et 5 à 11, dans lequel les informations d'image obtenues par imagerie d'un canal radiculaire d'une dent sont une image tridimensionnelle et sont au moins l'une d'une image de TDM à rayons X, d'une image ultrasonore et d'une image TCO.

13. Appareil de support de traitement de canal radiculaire selon l'une des revendications 1 et 5 à 12, dans lequel
l'appareil de support de traitement de canal radiculaire (200) comprend en outre une unité de communication (255) pour établir une connexion à un réseau, et
la mémoire (253) est configurée pour mettre à jour les informations relatives au traitement de canal radiculaire sur la base d'informations provenant d'une base de données externe connectée à la mémoire à travers l'unité de communication (255).

14. Appareil de support de traitement de canal radiculaire selon l'une des revendications 1 et 5 à 13, dans lequel
l'appareil de support de traitement de canal radiculaire (200) comprend en outre :
une unité d'entrée (257) configurée pour recevoir des informations sur un résultat de traitement obtenues par réalisation d'un traitement de canal radiculaire sur la base des informations délivrées en sortie à partir de l'unité de sortie (254) ; et
une unité de traitement de mise à jour (256) configurée pour mettre à jour, à travers un apprentissage automatique, les informations relatives au traitement de canal radiculaire stockées dans la mémoire (253) en utilisant les informations sur le résultat de traitement entrées dans l'unité d'entrée (257).

15. Programme pour commander un appareil de support de traitement de canal radiculaire (200) pour fournir des informations qui peuvent être utilisées pour un traitement de canal radiculaire, le programme comprenant :
l'acceptation d'informations d'image obtenues par imagerie d'un canal radiculaire d'une dent ;
génération d'informations relatives au traitement de canal radiculaire approprié pour une forme de canal radiculaire sur la base des informations d'image acceptées ;
délivrance en sortie des informations générées ;
spécification d'une classification de la forme du canal radiculaire sur la base des informations d'image acceptées ; et
sélection d'informations relatives au traitement de canal radiculaire stockées pour chaque classification de la forme du canal radiculaire à partir d'une mémoire (253) sur la base de la classification spécifiée.

16. Appareil de traitement de canal radiculaire (100) utilisé pour un traitement de canal radiculaire, l'appareil de traitement de canal radiculaire (100) comprenant :
une pièce à main (1) ayant une tête (2) au niveau de laquelle un outil de coupe (5) est maintenu de manière à pouvoir être entraîné ;
une unité d'entraînement (13) configurée pour entraîner l'outil de coupe (5) maintenu au niveau de la tête (2) ;
un dispositif de commande (11) configuré pour commander l'unité d'entraînement (13) ; et
l'appareil de support de traitement de canal radiculaire (200) selon l'une des revendications 1 à 14.

17. Système de support de traitement de canal radiculaire comprenant :
un appareil de traitement de canal radiculaire (100) selon la revendication 16, dans lequel
le dispositif de commande (11) est configuré pour commander l'unité d'entraînement (13) pour entraîner l'outil de coupe (5) sur la base des informations délivrées en sortie à partir de l'unité de sortie (254).

18. Système de support de traitement de canal radiculaire selon la revendication 17, dans lequel
l'appareil de traitement de canal radiculaire (100) comprend en outre un détecteur de charge configuré pour détecter une charge appliquée sur l'outil de coupe (5), et
le dispositif de commande (11) est configuré pour changer la commande de l'unité d'entraînement (13) en fonction de la charge appliquée sur l'outil de coupe (5) et détectée par le détecteur de charge.

19. Système de support de traitement de canal radiculaire selon la revendication 18, dans lequel le dispositif de commande (11) est configuré pour réaliser une commande pour un entraînement dans une rotation inverse, un intervalle de commutation entre une rotation vers l'avant et une rotation inverse, ou un entraînement jusqu'à une opération d'arrêt lorsque la charge appliquée sur l'outil de coupe (5) et détectée par le détecteur de charge est supérieure ou égale à une charge de référence.

20. Système de support de traitement de canal radiculaire selon l'une des revendications 17 à 19, comprenant en outre un détecteur de position (12) configuré pour détecter une position d'une extrémité de pointe de l'outil de coupe (5) à l'intérieur du canal radiculaire, la position étant obtenue par une mesure électrique de longueur de canal radiculaire, dans lequel
le dispositif de commande (11) est configuré pour changer la commande de l'unité d'entraînement (13) en fonction de la position détectée par le détecteur de position (12).

21. Système de support de traitement de canal radiculaire selon la revendication 20, dans lequel le dispositif de commande (11) est configuré pour réaliser une commande pour un entraînement dans une rotation inverse, un intervalle de commutation entre une rotation vers l'avant et une rotation inverse, ou un entraînement jusqu'à une opération d'arrêt lorsque la position détectée par le détecteur de position (12) atteint une position de référence.

22. Système de support de traitement de canal radiculaire selon l'une des revendications 17 à 21, comprenant en outre au moins un appareil de diagnostic par image (300) de : un appareil de diagnostic par image de TDM à rayons X ; un appareil de diagnostic par image ultrasonore ; et un appareil de diagnostic par image TCO.
